# EUROPEAN PATENT SPECIFICATION

(11) **EP 1 729 479 B1**
(45) Date of publication and mention of the grant of the patent: **11.08.2010**
(21) Application number: 06252799.9
(22) Date of filing: 31.05.2006
(51) Int. Cl.: H04L 29/06

(54) **Management system and communication device and data processing device used in such system**
Verwaltungssystem und in diesem System verwendetes Kommunikationsgerät und Datenverarbeitungsgerät
Système de gestion, et dispositif de communication et dispositif de traitement de données utilisés dans le dit système

(30) Priority: 31.05.2005 JP 2005159971
(43) Date of publication of application: 06.12.2006
(73) Proprietor: Brother Kogyo Kabushiki Kaisha, Nagoya-shi, Aichi-ken 467-8561 (JP)
(72) Inventor: Seki, Takao c/o Brother Kogyo K.K. IP Dept., Aichi-ken 467-8562 (JP); Kawai, Sunao Brother Kogyo K.K. IP Dept., Aichi-ken 467-8562 (JP)
(74) Representative: Smith, Samuel Leonard

(56) References cited:
- US-A1- 2002 010 800
- US-A1- 2002 154 333

## Description

### Background of the Invention

Aspects of the present invention relate to a management system in which a communication device and a data processing device having a function of managing the communication device are provided.

A management system in which a communication device and a data processing device having a function of managing the communication device are provided has become widespread. Frequently, in the communication device, a restriction table is used to prevent unauthorized devices from accessing the communication device. Since the communication device is able to block unauthorized access to the communication device from an external device, it is possible to prevent an authorized user from becoming unable to access the communication device due to the unauthorized access to the communication device, and to prevent consumable items of the communication device from being used uselessly due to the unauthorized access to the communication device. Further, the communication device is able to block access that might raise abnormal conditions in the communication device. An example of such a management system is disclosed in Japanese Patent Provisional Publication No. P2002-333958A.

However, the above mention communication device has a drawback that if a restriction table has an error (e.g., if an unsuitable IP address is written into the restriction table), a possibility, that the communication device restricts the access from a device which should not be regarded as an unauthorized device, arises.

If a management device serving to manage the communication device in the management system becomes unable to access the communication device due to an unsuitable setting operation conducted by an administrator to the restriction table, the management device can not remotely operate the communication device. In this situation, the administrator needs to go to the location of the communication device to directly operate the communication device, which is very troublesome for the administrator.

If the management device is configured to manage the restriction table by requesting the administrator to designate an address range defining addresses of devices for which access to the communication device is to be prohibited, the administrator might not notice that an address of the management device is carelessly contained within the address range defined by the administrator. If the management device is configured to manage the restriction table by requesting the administrator to designate an address range defining addresses of devices for which access to the communication device is to be permitted, the administrator might forget about registering an IP address of the management device while being preoccupied with registering IP addresses of devices other than the management device.

US-A-2002/0010800 discloses a software upgradable network access control system which is preferably resident within a host computer. In operation, the network aces control system controls the flow of data packets to and from a host computer to a network. The host computer may be networked to a network device located on a trusted private network or on an untrusted network. A memory stores an operating system and a set of rules which controls a plurality of data packets which are communicated to and from the network access control system. The data packets communicated to and from the network access control system are controlled by accepting, denying or rejecting data packets. The processor compares received data packets with the set of rules which accept, deny or reject packets. Each network access control system may be configured with a different set of rules.

US 2002/0154333 describes a communication device and a method for network communications to be performed by a computer having a network interface interfacing the computer with a network, as disclosed in the pre-characterizing sections of claims I and 15.

### Summary of the Invention

Aspects of the present invention are advantageous in that they provide at least one of a management system, a management device and a data processing device configured to prevent access to the communication device from being restricted by a mistake made on setting data to be applied to the communication device.

It is noted that various connections are set forth between elements in the following description. It is noted that these connections in general and unless specified otherwise, may be direct or indirect and that this specification is not intended to be limiting in this respect. Aspects of the invention may be implemented in computer software as programs storable on computer-readable media comprising but not limited to RAMs, ROMs, flash memory, EEPROMs, CD-media, DVD-media, temporary storage, hard disk drives, floppy drives, permanent storage, and the like.

According to an aspect of the invention, there is provided a communication device, comprising: a network interface that interfaces the communication device with a network; a reception judgment unit configured to judge whether to accept data received by the network interface from the network in accordance with predetermined restriction data defining at least one authorized device and/or at least one unauthorized device; and a process execution unit configured to execute a process in response to the reception judgment unit judging to accept said data such that if setting request data for requesting execution of change of settings is received through the network interface from the network, the process execution unit changes settings of the communication device in accordance with the setting request data; and wherein the reception judgment unit is further configured to accept data received by the network interface from the network if a source device of data corresponds to a predetermined management device serving to manage the communication device in the network regardless of a judgment result made by the reception judgment unit in accordance with the predetermined restriction data; characterized in that: the communication device further comprises an automatic setting unit configured such that in response to the data on an unauthorized device contained in the setting request data being set as the predetermined restriction data in a state where the setting request data does not contain setting of the predetermined management device, the automatic setting unit sets a source device of the setting request data for the setting of the predetermined management device.

Since the reception judgment unit judges to accept data received by the network interface from the network if a source device of data corresponds to the predetermined management device regardless of the judgment result made in accordance with the predetermined restriction data, it is possible to prevent the communication device from operating to inhibit access from the management device even if a user makes a mistake of configuring settings (comprising predetermined restriction data) by which the management device will become unable to access the communication device. Therefore, it is possible to prevent the management device from becoming unable to access the communication device due to a mistake made bay a user in a setting operation.

Optionally, the reception judgment unit may be configured to identify a source device of data received by the network interface and to use an identification result to judge whether to accept data received by the network interface.

Incidentally, the process execution may get data from the network interface. In this case, the execution control unit may discard data for which the reception judgment unit judges not to accept.

In at least one aspect, an address of a source device of data is contained in data transmitted from a device to the communication device through the network. In this case, the reception judgment unit may identify a source device of data received by the network interface by using an address of a source device contained in data received by the network interface.

By registering an address of the predetermined management device, the reception judgment unit is able to judge whether a source device of data is the predetermined management device. Such a configuration enables a user to easily make settings of the management device. For example, in an IP(Internet Protocol)-based network, an address of a source device of data is exchanged between devices,

In order to enable the reception judgment unit using an address contained in the received data, an address may be registered in a server. In this case, the judgment may be conducted by inquiring the server whether an address contained in the received data is identical with the address of the management device. However, to inquire the server about the address is somewhat troublesome. For this reason, the communication device optionally comprises a storage unit storing an address of the predetermined management device. In this case, the reception judgment unit may judges that a source device of data received by the network interface corresponds to the predetermined management device if an address contained in data received by the network interface is identical with the address of the predetermined management device stored in the storage unit.

Such a configuration eliminates the need for providing a dedicated server for storing an address of the management device in the network. Therefore, the network configuration can be simplified.

In at least one aspect, the process execution unit is configured such that if setting request data requesting for execution of change of settings is received through the network interface from the network, the process execution unit changes settings of the communication device in accordance with the setting request data.

With this configuration, it is possible to prevent the management device from becoming unable to change settings of the communication device through the network.

In at least one aspect, the process execution unit is configured such that in response to data on an unauthorized device is contained in the setting request data, the process execution unit changes the settings of the communication device so that the unauthorized device contained in the setting request data is set as the predetermined restriction data. In this aspect, the reception judgment device judges not to accept data received by the network interface in response to a source device of the data received by the network interface corresponding to the at least one unauthorized device defined by the predetermined restriction data, and to accept data received by the network interface in response to a source device of the data received by the network interface not corresponding to the at least one unauthorized device defined by the predetermined restriction data. Further, the reception judgment unit judges to accept data received by the network interface in response to a source device of the data received by the network interface corresponding to the predetermined management device regardless of a judgment result made by the reception judgment unit in accordance with the predetermined restriction data.

With this configuration, it is possible to prevent the management device from becoming unable to set the setting regarding an unauthorized device to the communication device due to a mistake made by a user in a user operation for setting unauthorized devices.

The communication device optionally comprises an automatic setting unit configured such that in response to the unauthorized device contained in the setting request data being set as the predetermined restriction data in a state where the setting request data does not contain setting of the predetermined management device, the automatic setting unit sets a source device of the setting request data for the setting of the predetermined management device.

With this configuration, even if a user makes a mistake in a setting operation, re-setting from a device operated by a user is not obstructed. Such a configuration also decreases a burden of addressing a problem due to the setting mistake. In a conventional management system, if a user makes a mistake in a setting operation and thereby the setting operation through the network is made impossible, the user needs to directly operate an operation unit of the communication device. By contrast, according to the above mentioned configuration, such a problem can be solved.

In at least one aspect, the process execution unit is configured such that in response to data on an authorized device being contained in the setting request data, the process execution unit changes the settings of the communication device so that the authorized device contained in the setting request data is set as the predetermined restriction data. In this aspect, the reception judgment device judges to accept data received by the network interface in response to a source device of the data received by the network interface corresponding to the at least one authorized device defined by the predetermined restriction data, and not to accept data received by the network interface in response to a source device of the data received by the network interface not corresponding to the at least one authorized device defined by the predetermined restriction data. Further, the reception judgment unit judges to accept data received by the network interface in response to a source device of the data received by the network interface corresponding to the predetermined management device regardless of a judgment result made by the reception judgment unit in accordance with the predetermined restriction data.

With this configuration, it is possible to prevent the management device from becoming unable to access the communication device due to a mistake made by a user in a setting operation for setting authorized devices. Such a configuration enables a user to easily manage authorized devices.

The communication device optionally comprises an automatic setting unit configured such that in response to the authorized device contained in the setting request data being set as the predetermined restriction data in a state where the setting request data does not contain setting of the predetermined management device, the automatic setting unit sets a source device of the setting request data for the setting of the predetermined management device.

With this configuration, even if a user makes a mistake in a setting operation, re-setting from a device operated by a user is not obstructed. Such a configuration also decreases a burden of addressing a problem due to the setting mistake.

According to another aspect of the invention, there is provided a management system in which a communication device according to any one of the previous aspects and a data processing device having a function of managing the communication device are provided.

Optionally, the data processing device comprises a first setting unit configured to set the predetermined management device to the communication device in accordance with setting regarding the predetermined management device inputted through an input device, a second setting unit configured to set the predetermined restriction data to the communication device in accordance with setting regarding the predetermined restriction data inputted through the input device, and a setting judgment unit configured to judge whether the setting regarding the predetermined management device has been designated through the input device before the second setting unit executes a setting operation.

Since the reception judgment unit judges to accept data received by the network interface from the network if a source device of data corresponds to the predetermined management device regardless of the judgment result made in accordance with the predetermined restriction data, it is possible to prevent the communication device from operating to inhibit access from the management device even if a user makes a mistake of configuring settings (comprising predetermined restriction data) by which the management device will become unable to access the communication device. Therefore, it is possible to prevent the management device from becoming unable to access the communication device due to a mistake made bay a user in a setting operation.

In an at least one aspect, the data processing device further comprises a notification unit configured such that if the setting judgment unit judges that the setting regarding the predetermined management device has not been designated, the notification unit notifies a user that the predetermined management device has not been set.

Since the notification unit notifies a user that the predetermined management device has not been set if the setting judgment unit judges that the setting regarding the predetermined management device has not been designated, it is possible to request reconsideration for execution of settings of the communication device.

Incidentally, the management system may be configured to inquiry a user whether to execute a setting operation when the fact that the management device has not been designated is notified to the user, and to execute the setting operation when the user confirms the execution of the setting operation. However, there is a possibility that the management device becomes unable to access the communication device if the unauthorized devices are set in a state where the management device is not set. Therefore, the notification unit may be configured as follows.

In at least one aspect, the notification unit is configured to stop the setting operation to be executed by the second setting unit in addition to notifying the user that the predetermined management device has not been set.

Such a configuration makes it possible to avoid the setting of unauthorized (or authorized) devices from being established in a state where the setting of the management device has not been set.

Incidentally, the management system may be applied to a system in which the communication device and the data processing device are connected to each other through a dedicated line.

In at least one aspect, the process execution unit of the communication device is configured such that if setting request data requesting for execution of change of settings is received through the network interface from the network, the process execution unit changes settings of the communication device in accordance with the setting request data. In this aspect, the data processing device comprises a network interface that interfaces the data processing device with the network. The first setting unit sets the predetermined management device to the communication device by transmitting setting request data containing the setting regarding the predetermined management device inputted through the input device to the communication device through the network. Further, the second setting unit sets the predetermined restriction data to the communication device by transmitting setting request data containing the setting regarding the at least one unauthorized device to the communication device through the network.

Since the data processing device is able to set the unauthorized device and the management device to the communication device through the network, if a user makes a mistake in a setting operation for the unauthorized devices, the data processing device being operated by the user may set as one of the unauthorized devices. However, according to the above mentioned configuration, the notification unit notifies the user that the management device has not been set. Therefore, it is possible to prevent a device being operated by a user from becoming unable to access the communication device.

In at least one aspect, the data processing device further comprises an automatic setting unit configured such that if the setting judgment unit judges that the setting regarding the predetermined management device has not been designated, the automatic setting unit sets setting of the predetermined management device to the communication device by transmitting setting request data containing the setting of the predetermined management device to the communication device.

Since the data processing device (i.e., a device being used by a user) is set as the management device if the management device has not been designated, it is possible to prevent the data processing device from becoming unable to access the communication device after requesting the execution of a setting operation.

In at least one aspect, the data processing device may comprise a setting judgment unit configured to judge whether the setting regarding the predetermined management device has been designated before the second setting unit executes a setting operation, and an automatic setting unit configured such that if the setting judgment unit judges that the setting regarding the predetermined management device has not been designated, the automatic setting unit sets a source device of data of the setting regarding the predetermined restriction data for the predetermined management device.

Since the data processing device (i.e., a device being used by a user) is set as the management device if the management device has not been designated, it is possible to prevent the data processing device from becoming unable to access the communication device after requesting the execution of a setting operation.

According to another aspect of the invention, there is provided a method for network communications to be performed by a computer having a network interface interfacing the computer with a network, the method comprising the steps of: judging whether to accept data received by the network interface from the network in accordance with predetermined restriction data defining at least one authorized device and/or at least one unauthorized device; and executing a process in response to data being judged to be accepted, such that if setting request data for requesting execution of change of settings is received through the network interface from the network, the process changes settings of the communication device in accordance with the setting request data; and wherein, in the judging step, it is judged to accept data received by the network interface from the network if a source device of data received by the network interface corresponds to a predetermined management device serving to manage the computer regardless of a judgment result made by the judging step in accordance with the predetermined restriction data, characterized in that: in response to the data on an unauthorized device contained in the setting request data being set as the predetermined restriction data in a state where the setting request data does not contain setting of the predetermined management device, setting a source device of the setting request data for the setting of the predetermined management device.

In at least one aspect, the method may include identifying a source device of data received by the network interface so that an identification result is used in the judging step.

In at least one aspect, there is provided a computer program product comprising computer readable instructions causing the computer, when executed, to perform the steps of the above mentioned method.

### Brief Description of the Accompanying Drawings

Fig. 1 is a block diagram of a communication system according to a first example.
Fig. 2 is an explanatory illustration presenting an operation (a data receiving operation) of a communication control unit of a printer provided in the communication system.
Fig. 3 illustrates a data structure of filtering settings stored in an NVRAM in the printer.
Fig. 4 is a flowchart illustrating a reception control process to be executed by a communication control unit in the printer.
Fig. 5 shows a setting change task executed under control of a CPU of the printer.
Fig. 6A shows a print job registration task executed under control of the CPU of the printer.
Fig. 6B is a flowchart illustrating a print control process executed by a print control process task running concurrently with the print job registration task.
Fig. 7 is a flowchart illustrating a function setting process to be executed by a personal computer provided in the communication system.
Fig. 8 illustrates an example of a filtering setting screen displayed on a display unit of the personal computer.
Fig. 9A illustrates an example of a message display screen in which a message indicating that an IP address is inappropriate is contained.
Fig. 9B illustrates an example of a message display screen in which a message requesting a user to input an IP address of a management device.
Fig. 9C illustrates an example of a message display screen in which a message requesting a user to check whether to apply settings inputted to a filtering setting screen to the printer is displayed.
Fig. 10 shows a function setting program configured as a variation of the function setting program shown in Fig. 7.
Fig. 11 illustrates an example of a message display screen containing a message indicating that its own address is to be set as an IP address of the management device.
Fig. 12 shows a system configuration of a communication system according to a second example.
Figs. 13 and 14 show a setting process to be executed by an embedded web server implemented in a printer provided in the communication system according to the second example.
Fig. 15 is a flowchart illustrating a process to be executed by a CPU of a personal computer provided in the communication system according to the second example after the personal computer receives filtering setting screen data.
Fig. 16 is a flowchart illustrating a process to be executed by the personal computer after the personal computer receives confirmation screen data.
Fig. 17 is a flowchart of a part of the setting process to be executed in place of the process shown in Fig. 14.
Fig. 18 illustrates a configuration of a communication system according to a third example.
Figs. 19 and 20 show a setting process to be executed by a web server provided in the communication system according to the third example.
Fig. 21 illustrates another example of a filtering setting screen.

### Detailed Description of the Embodiments

Hereafter, an illustrative example according to the invention will be described with reference to the accompanying drawings.

### FIRST EXAMPLE

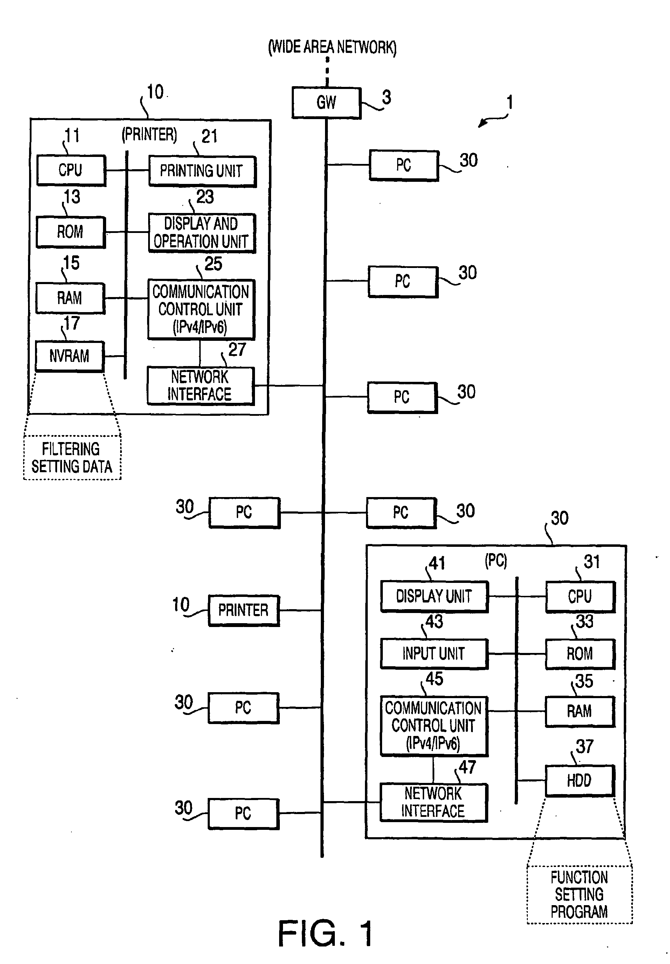

Fig. 1 is a block diagram of a communication system 1 according to a first example. The communication system 1 comprises a gateway 3 connected to a wide area network, printers 10 (10, 10, ...), and PCs (personal computers) 30 (30,30,...). Since the printers 10 have the same configuration, a configuration of one of them is explained. Since the PCs 30 have the same configuration, a configuration of one of them is explained. Each of the printer 10 and the PC 30 is configured to have the function of performing TCP/IP based communications. That is, the printers 10 and the PCs 30 form a LAN (local area network).

As shown in Fig. 1, the printer 10 comprises a CPU 11 which controls internal components of the printer 10, a ROM 13 storing various programs to be executed by the CPU 11, a RAM 15 used as a work memory by the CPU 11 for execution of programs, an NVRAM (nonvolatile RAM) 17 which stores various types of setting data, a printing unit 21 configured to form images on a recording medium (e.g., a sheet of paper) under control of the CPU 11, a display and operation unit 23 having a display (e.g., an LCD monitor) and an operation unit (e.g., a keyboard) to be operated by a user, a communication control unit 25 configured to control data communications in accordance with TCP/IP so that the printer 10 can perform TCP/IP based communications, and a network interface (LAN interface) 27 connected to the LAN.

The communication control unit 25, which is formed as a separate unit not integrated into the CPU 11, may be formed as a dedicated unit (e.g., a microcomputer chip) or may be a functional unit accomplished by executing a group of pieces of software (e.g., a protocol stack). In this example, the communication unit 25 is configured as a functional block of software.

The PC 30 comprises a CPU 31 which controls internal components of the PC 30, a ROM 33 storing programs such as a boot-up program to be executed by the CPU 31, a RAM 35 used as a work memory by the CPU 31 for execution of programs, an HDD (hard disk drive) 37 storing various program and data such as an operating system and application programs, a display unit 41 (e.g., a LCD monitor) on which information is displayed, an input unit 43 comprising a keyboard and a mouse to be operated by a user, a communication control unit 45 configured to control data communications in accordance with TCP/IP so that the PC 30 can perform TCP/IP based communications, and a network interface (LAN interface) 47 connected to the LAN.

In the printer 10, tasks which provide functions for the printer 10 while communicating with another device in the LAN are executed under control of the CPU 11. The communication control unit 25 handles data exchanged between each task and another device in the LAN.

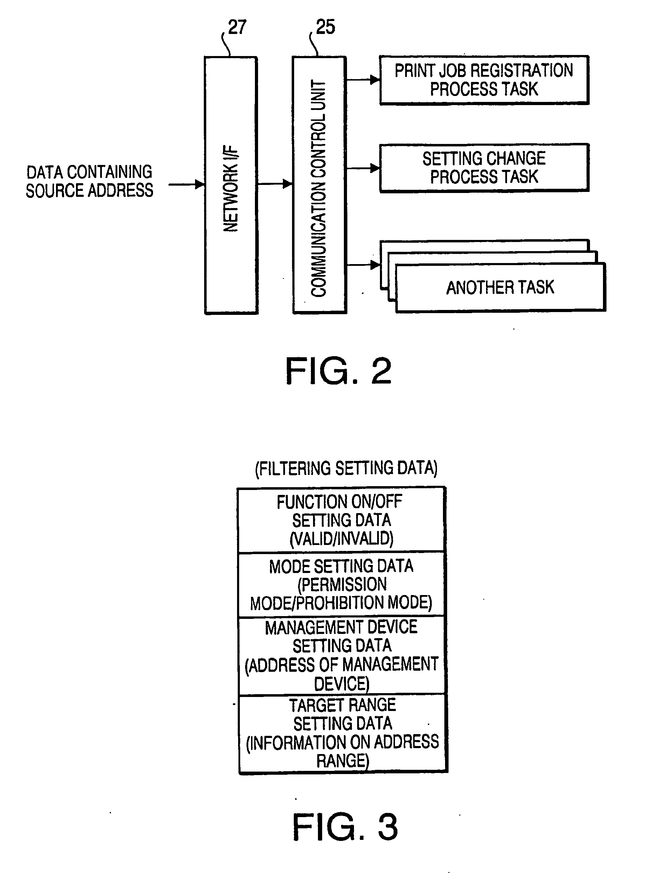

Fig. 2 is an explanatory illustration presenting an operation (i.e., a data receiving operation) of the communication control unit 25. The communication control unit 25 converts transmission data provided by a task into TCP/IP data by subjecting the transmission data to a predetermined process (e.g., adding its own IP address to the transmission data as a source device address), and then passes the transmission data (TCP/IP data) to the network interface 27. The network interface 27 has functions of converting the transmission data passed from the communication control unit 25 into an electrical signal to be sent to the LAN, and converting an electrical signal from the LAN into digital data which the communication control unit 25 is able to handle. The generated digital data is stored in a buffer of the network interface 27.

The communication control unit 25 gets the received data from the buffer of the network interface 27. Then, the communication control unit 25 determines a task to which the received data is to be passed in accordance with data such as a port number contained in the received data, and passes the received data to a corresponding task.

The communication control unit 25 has a filtering function. For example, by the filtering function, the communication control unit 25 is able to discard received data to which a certain IP address is added as a source address, based on filtering setting data store in the NVRAM 17, if a filtering function is in an ON state. By such a configuration, discarded data is not passed to a corresponding task.

Fig. 3 illustrates a data structure of the filtering setting data stored in the NVRAM 17. The filter setting data is used to define an operation of the filtering function. The filter setting data comprises function on/off setting data, mode setting data, management device setting data, and target range setting data.

The function on/off setting data is used to switch the filtering function from ON to OFF (or OFF to ON). One of values "Valid" and "Invalid" is assigned to the function on/off setting data. The communication control unit 25 switches the filtering function to ON if the function on/off setting data is "Vaild", while the communication control unit 25 switches the filtering function to OFF if the function on/off setting data is "Invaild".

One of values "Permission Mode" and "Prohibition Mode" is assigned to the mode setting data. If the mode setting data is "Permission Mode", the communication control unit 25 operates to accept data from a device of which address is within an address range defined by the target range setting data. If the mode setting data is "Prohibition Mode", the communication control unit 25 operates to prohibit reception of data from a device of which address is within an address range defined by the target range setting data (i.e., to discard such data), and to accept data from other devices (i.e., devices whose addresses are not in the address range) to pass such data to a corresponding task.

The management device setting data defines an IP address of a management device to be excluded from target devices whose data is to be discarded. As described later, even if the filtering function is set to ON, the communication control unit 25 operates not to discard data containing a source address identical with an address of the management device by way of exception.

The target range setting data is data representing a range of IP addresses to be targeted for filtering. The address range is expressed by data on an IP address and data on a mask address. For example, if an IP address is "10.134.0.0" and a mask address is "255.255.0.0", IP addresses having an upper address of "10.134" are targeted for filtering.

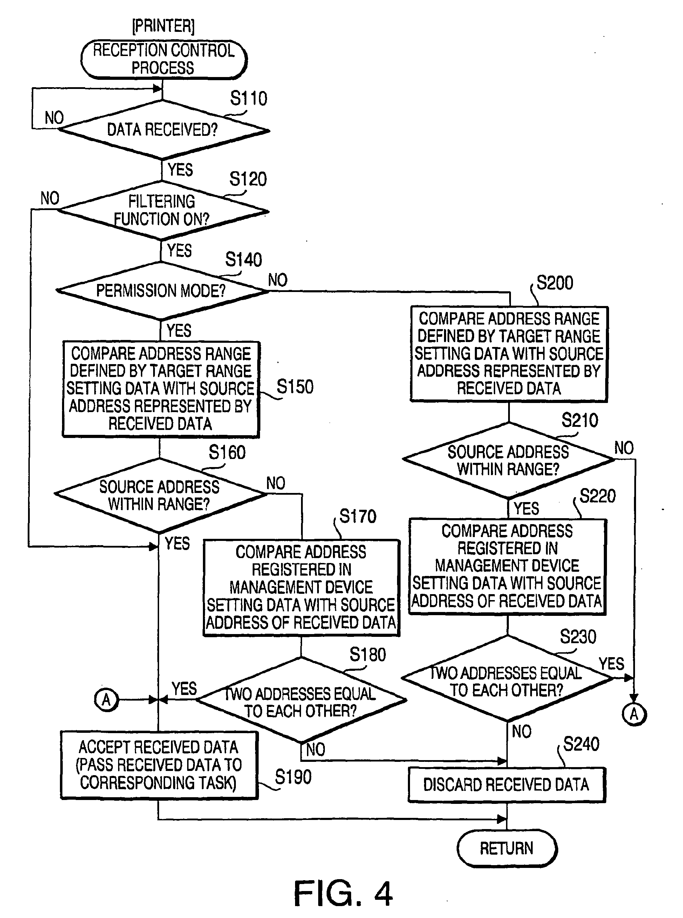

Hereafter, operations of the communication control unit 25 is described. Fig. 4 is a flowchart illustrating a reception control process to be executed by the communication control unit 25. The above mentioned filtering function is attained by the reception control process.

First, the communication control unit 25 waits until the network interface 27 receives data (an IP packet) from a device in the LAN (step S110). If the network interface 27 receives data (S110: YES), the communication control unit 25 judges whether the filtering function is set ON in accordance with the filtering setting data store din NVRAM 17 (step S120). More specifically, the communication control unit 25 judges that the filtering function is set ON if the function on/off setting data is "Valid", while the communication control unit 25 judges that the filtering function is set OFF if the function on/off setting data is "Invalid".

If the filtering function is OFF (S120: NO), control proceeds to step S 190 where the communication control unit 25 accepts data received by the network interface 27. In this case, the communication control unit 25 passes received data to a task corresponding to a port number represented by the received data. Then, the reception control process terminates.

If the filtering function is ON (S120: YES), control proceeds to step S140 where the communication control unit 25 judges whether the mode setting data is "Permission Mode". If the mode setting data is "Permission Mode" (S 140: YES), control proceeds to step S 150. If the mode setting data is "Prohibition Mode" (S 140: NO), control proceeds to step S200.

In step S150, the communication control unit 25 compares a source address of the received data with an address range defined by the target range setting data so as to judge whether the source address of the received data is within the address range defined by the target range setting data (step S160).

Similarly to the operations of the communication control unit 25 which adds its own IP address to transmission data, the PC 30 operates to add its own IP address to transmission data when outputting the transmission data. It is understood that in step S160 the source address added to data by a device (e.g., the PC 30) is compared with the address range so as to judge whether the source device of the received data is a reception target device corresponding to the address range defined in the target range setting data.

If the source address represented by the received data is not within the address range defmed by the target range setting data (S160: NO), control proceeds to step S 170 where the communication control unit 25 compares the source address of the received data with an IP address defined by the management device setting data, and judges whether the source address is identical with the IP address defined by the management device setting data (step S 180).

If the source address is identical with the IP address defined by the management device setting data (S180: YES), control proceeds to step S190 where the data received by the network interface 27 is passed to a corresponding task. Then, the reception control process terminates. In step S 180, if the management device setting data is empty, the judgment result of step S 180 may be "YES" so that the filtering function is disabled.

If the source address is not identical with the IP address defined by the management device setting data (S 180: NO), the communication control unit 25 operates not to accept the data received by the network interface 27 and to discard the received data (step S240). In this case, the received data is not passed to a corresponding task. Then, the reception control process terminates.

If the mode setting data is "Prohibition Mode" (S 140: NO), control proceeds to step S200 where the communication control unit 25 compares the source address represented by the received data with the address rage defined by the target range setting data stored in the NVRAM 17, and judges whether the source address represented by the received data is within the address range defined by the target range setting data (step S210). If the source address represented by the received data is not within the address range defined by the target range setting data (S210: NO), control proceeds to step S 190 where the communication control unit 25 passes the received data to a corresponding task. Then, the reception control process terminates.

If the source address represented by the received data is within the address range defined by the target range setting data (S210: YES), control proceeds to step S220 where the communication control unit 25 compares the source address represented by the received data with the IP address defined by the management device setting data, and judges whether the source address represented by the received data is identical with the IP address defined by the management device setting data (step S230).

If the source address represented by the received data is identical with the IP address defined by the management device setting data (S230: YES), the communication control unit 25 passes the received data to a corresponding task. Then, the reception control process terminates. If the source address represented by the received data is not identical with the IP address defined by the management device setting data (S230: NO), control proceeds to step S240 where the communication control unit 25 discards the received data from the network interface 27. Then, the reception control process terminates. The filtering function is thus attained.

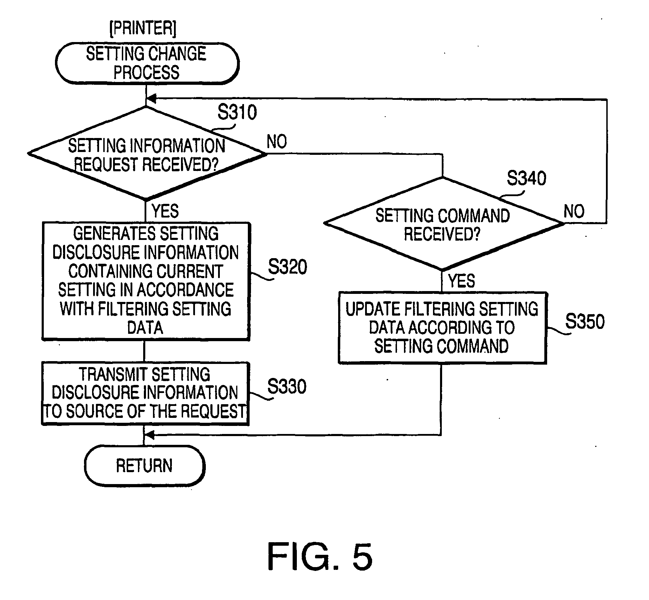

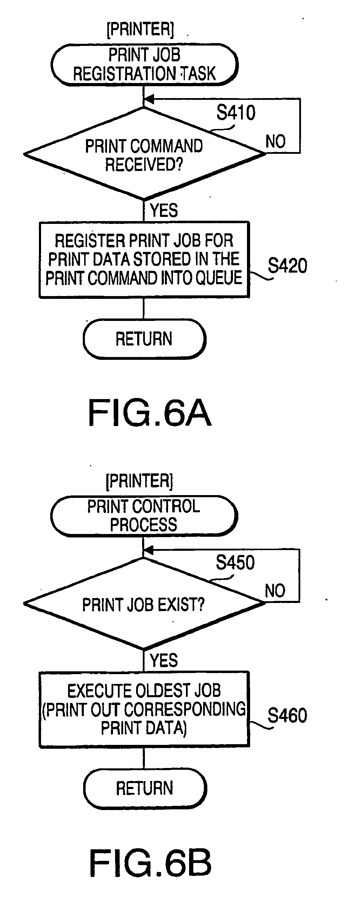

Fig. 5 shows a setting change task executed under control of the CPU 11 of the printer 10 as one of the above mentioned tasks. Fig. 6A shows a print job registration task executed under control of the CPU 11 of the printer 10 as one of the above mentioned tasks.

The setting change task will now be explained. If the CPU 11 receives a setting data request from a device (e.g., the PC 30) in the LAN (S310: YES), control proceeds to step S320 where the CPU 11 generates setting disclosure data containing current settings (i.e., current setting values of the function on/off setting data, mode setting data, management device setting data, and target range setting data). Then, the CPU 11 transmits the setting disclosure data to a source of the request (step S330). Subsequently, the process is executed from step S310.

If the CPU 11 receives a setting command from a device (e.g., the PC 30) in the LAN through the communication control unit 25 (S340 YES), control proceeds to step S350 where the CPU 11 updates the filtering setting data stored in the NVRAM 17 in accordance with instructions contained in the received setting command. The setting command is generated in accordance with setting operations conducted by the user on the user's device (e.g., the PC 30). More specifically, the setting command comprises the function on/off setting data, mode setting data, management device setting data, and target range setting data. The communication control unit 25 updates the filtering setting data to reflect values contained in the setting command. After step S350 is processed, step S310 is processed again and the CPU 11 waits until a setting data request or a setting command is received.

Fig. 6A is a flowchart illustrating a print job registration task executed repeatedly by a print job registration task of the CPU 11. If the CPU 11 receives a print command from a device (e.g., the PC 30) in the LAN (S410: YES), the CPU 11 registers a print job corresponding to print data contained in the print command in a queue in the printer 10 so that an image corresponding to the print data is printed out by the printing unit 21 (step S420). The CPU 11 causes the print unit 21 to perform a printing operation for print data transmitted from the PC 30 through the LAN each time the printer 10 receives the print command from the PC 30. In this example, each of the PCs 30 has the function of transmitting a print command to the printer 10.

Fig. 6B is a flowchart illustrating a print control process executed by a print control process task running concurrently with the print job registration task. The print control process task of the CPU 11 repeatedly executes the print control process. The CPU 11 waits until a print job is registered in a queue (step S450: NO). If print jobs have been registered in a queue (S450: YES), the CPU 11 selects the oldest print job from among the registered print jobs as a target, and then subjects the selected job to a print job (step S460). More specifically, the print data corresponding to the selected print job is passed to the print unit 21 so as to cause the printing unit 21 to print out an image corresponding to the print data. Such a printing operation is repeated until all of the print jobs are processed. If no print job remains in the queue, the CPU 11 waits until a print job is newly registered in the queue. If a print job is newly registered in the queue, the newly registered print job is processed. A network printing function of the printer 10 is thus attained by the above mentioned operations of the print control process task and the print job registration task.

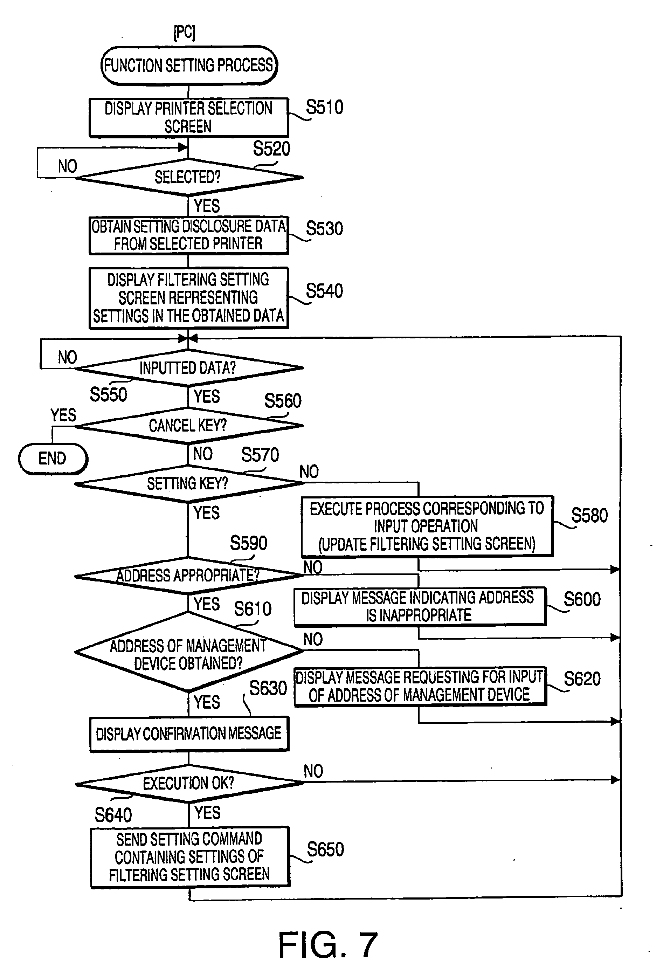

The PC 30 in the communication system 1 has a function setting program corresponding to a function setting process shown in Fig. 7. The function setting program may be stored in the HDD 37 of the PC 30. By executing the function setting process, the setting data request and the setting command are transmitted to the printer 10 in accordance with instructions inputted by a user. Fig 7 shows a flowchart of the function setting process which is initiated when an execution command for the function setting program is inputted through the input unit 43.

First, the CPU 31 searches for devices (printers 10) in the LAN and generates a printer selection screen (which may be displayed as a window or a dialog box) displaying a list of the printers 10 found in the LAN (step S510). Through the printer selection screen, a user is able to designate one of the printers 10. Next, in step S520, the CPU 31 judges whether a printer is selected through printer selection screen. The CPU 31 waits until a printer is selected through the printer selection screen (S520: NO). If a printer is selected through the printer selection screen (S520: YES), the CPU 30 transmits the setting data request to the printer 10 selected by the user via the communication control unit 45, so that the CPU 31 receives the setting disclosure data via the communication control unit 45 (step S530).

After receiving the setting disclosure data from the printer 10, the CPU 31 displays a filtering setting screen formed as a GUI (graphical user interface) containing current settings of the printer 10, on the display unit 41 (step S540).

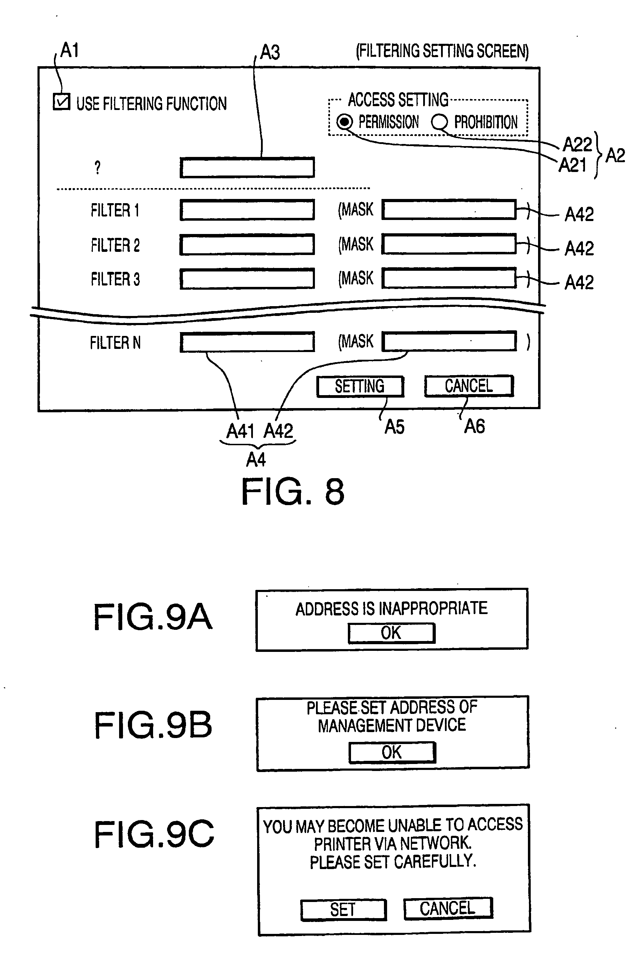

Fig. 8 illustrates an example of a filtering setting screen (which may be displayed as a window or a dialog box) displayed on the display unit 41. As shown in Fig. 8, the filtering setting screen comprises a check box A1 for designating an on/off state of the filtering function, a radio button A2 (buttons A21 and A22) for the mode setting, an input field A3 for setting an address of the management device, an input field A4 (comprising an IP address input field A41 and a mask data input field A42) for designating an address range, a setting key A5 for inputting a setting command, and a cancel key A6 for inputting a cancel command.

In step S540, in accordance with the setting disclosure data, the CPU 31 determines whether the check box A1 is a checked state or a non-checked state, and then marks the radio button A21 corresponding to the "Permission Mode" or the radio button A22 corresponding to the "Prohibition Mode". Further, the CPU 31 displays an IP address in the input field A3 if the IP address of the management device is defined, displays data on IP addresses representing an address range in the input field A41 if the address range is defined, and displays mask data in the input field A42. The filtering setting screen representing the current settings is thus generated and displayed on the display unit 41 as status data of the printer 10.

After the filtering setting data is displayed in step S540, the CPU 31 waits an user input is received through the input unit 43 (step S550). If a user input is received (S550: YES), control proceeds to step S560 where the CPU 31 judges whether the user input corresponds to an operation of pressing the cancel key A6. If the user input corresponds to the operation of pressing the cancel key A6 (S560: YES), the function setting process terminates.

If the user input does not correspond to the operation of pressing the cancel key A6 (S560: NO), control proceeds to step S570 where the CPU 31 judges whether the user input corresponds to an operation for pressing the setting key A5. If the user input does not correspond to an operation for pressing the setting key A5 (S570: NO), the CPU 31 executes a process corresponding to the user input (step S580).

More specifically, the CPU 31 identifies an operation target on the filtering setting screen in accordance with the user input. The CPU 31 switches the state of the check box A1 between the checked and non-checked states in accordance with the user input if the operation target is the check box A1. If the operation target is the radio button A2, the CPU 31 marks one of the radio buttons A21 and A22 and brings the other into an unmarked state. If the operation target is the input fields A3 and A4, the CPU 31 displays a character string inputted through the input unit 43 on a corresponding input field. The filtering setting screen is thus updated in accordance with the user input in step S580.

If the user input corresponds to an operation of pressing the setting key A5 (S570: YES), control proceeds to step S590 where the CPU 31 judges whether a character string inputted to each of the input fields A3 and A4 represents an IP address (in this case an input field to which no character string is inputted may be neglected). If the character string does not represent an IP address (S590: NO), control proceeds to step S600 where a message indicating that an IP address is inappropriate is displayed on a message display screen. Fig. 9A illustrates an example of a message display screen (which may be displayed as a window or a dialog box) in which a message indicating that an IP address is inappropriate is displayed.

In step S600, the CPU 31 waits until an OK key displayed on the message display screen is pressed by the user. If the OK key is pressed, control returns to step S550 where the CPU 31 waits until a user input is newly inputted trough the input unit 43.

If the character string represents an IP address (S590: YES), control proceeds to step S610 where the CPU 31 judges whether an IP address of the management device has been gotten. Specifically, in step S610, the CPU judges whether an IP address of the management device has been gotten by judging whether a character string has been inputted to the input field 43 by the user.

If the IP address of the management device has not been gotten (S610: NO), control proceeds to step S620 where the CPU 31 displays a message requesting the user to input an IP address of the management device on the message display screen. Fig. 9B illustrates an example of a message display screen (which may be displayed as a window or a dialog box) in which a message requesting the user to input an IP address of the management device is contained. In step S620, the CPU 31 waits until an OK key displayed on the message display screen is pressed by the user. If the OK key is pressed, control returns to step S550 where the CPU 31 waits until a user input is newly inputted trough the input unit 43.

If the IP address of the management device has been gotten (S610: YES), the CPU 31 displays a message requesting the user to check whether to apply the settings inputted to the filtering setting screen to the printer 10 (step S630). Fig. 9C illustrates an example of the message display screen in which a message requesting the user to check whether to apply the settings inputted to the filtering setting screen to the printer 10 is displayed. On the message display screen shown Fig. 9C, a setting key and a cancel key are provided. After displaying the message in step S630, the CPU 31 waits until a user input corresponding to the pressing of the setting key or a use input corresponding to the pressing of the cancel key is received through the message display screen shown in Fig. 9C. If the user input is received, control proceeds to step S640 where the CPU 31 judges whether the user input represents the pressing of the setting key. If the user input does not represent the pressing of the setting key, i.e., the user input represents the pressing of the cancel key (S640: NO), control returns to step S550.

If the user input represents the pressing of the setting key (S640: YES), control proceeds to step S650 where the CPU 31 generates a setting command containing command data for instructing the printer 10 to update its settings to reflect settings inputted to the filtering setting screen by the user, and transmits the setting command to the printer 10 via the communication control unit 45. After finishing step S650, control returns to step S550 where the CPU 31 waits until a next user input is received.

As described above, the printer 10 operates to accept data having a source address identical with the IP address of the management device and to provide the data to a corresponding task regardless of whether the source address is within the address range defined by the target range setting data in a state where the filtering function is set ON. Therefore, according to the example, even if the user (administrator) erroneously inputs an inappropriate address range to the filtering setting screen, the user is able to access the printer 10 through the LAN from the PC 30 which is registered as a management device. By registering the PC 30 having the function setting program as a management device, it is possible to apply the settings to the printer 10 again through the network even if the user made a mistake of inputting an inappropriate address.

As described above, in a conventional communication system, if a user makes a mistake of inputting an inappropriate address range, a management device becomes unable to access a printer via a network. In this case, a user needs to conduct a setting operation through an operation unit of the printer. The above mentioned example can solve such a problem. In general an operation unit of a printer has poor operability. Therefore, making settings using such an operation unit of a printer is uncomfortable for a user. By contrast, according to the example, such a user operation can be conducted using the input unit 43 of the PC 30 which has in general rich operability. Therefore, according to the example, such uncomfortable feeling caused by poor operability of a printer can be removed.

In the above mentioned example, when the settings of the printer 10 are updated, the PC 30 operates to check whether an IP address of the management device has been inputted. If an IP address of the management device has not been inputted, the PC 30 operates to request the user to input an IP address of the management device through the message display screen, and not to update the settings of the printer until an IP address of the management device is inputted. Such a configuration prevents the filtering function from switching to ON in a state where the IP address of the management device is not set.

Therefore, according to the example, it is possible to access the printer 10 reliably from a management device (i.e., the PC 30). It is also possible to reliably prevent a problem that the PC 30 becomes unable to access the printer 10 from occurring in the communication system.

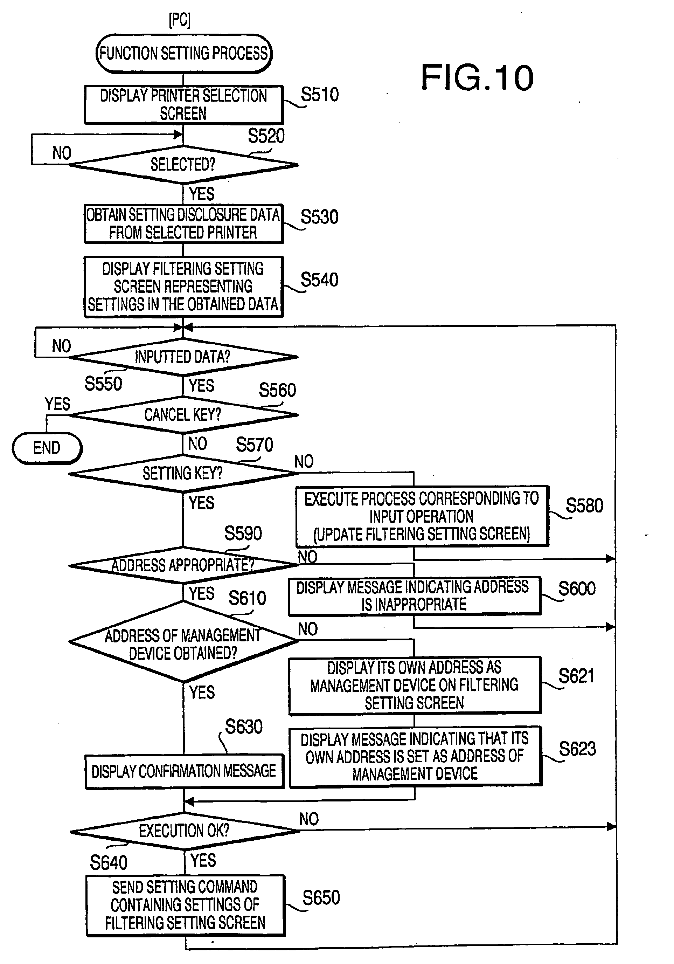

In the above mentioned first example, the PC 30 operates to display a message requesting the user to input an IP address of the management device if the PC 30 judges that an IP address of the management device has not been inputted to the input field A3 at a time when the setting key of the filtering setting screen is pressed. However, the function setting program may be configured to automatically set an IP address of a device which is displaying the filtering setting screen, if an IP address of the management device has not been set to the input field A3 at a time when the setting key of the filtering setting screen is pressed. Fig. 10 shows such a function setting program configured as a variation of the function setting program shown in Fig. 7.

In Fig. 10, to steps which are substantially the same as those of the function setting program shown in Fig. 7, same step numbers are assigned, and explanations thereof will not be repeated. In the function setting process shown in Fig. 10, steps S621 and S623 are processed in place of step S620 of Fig. 7.

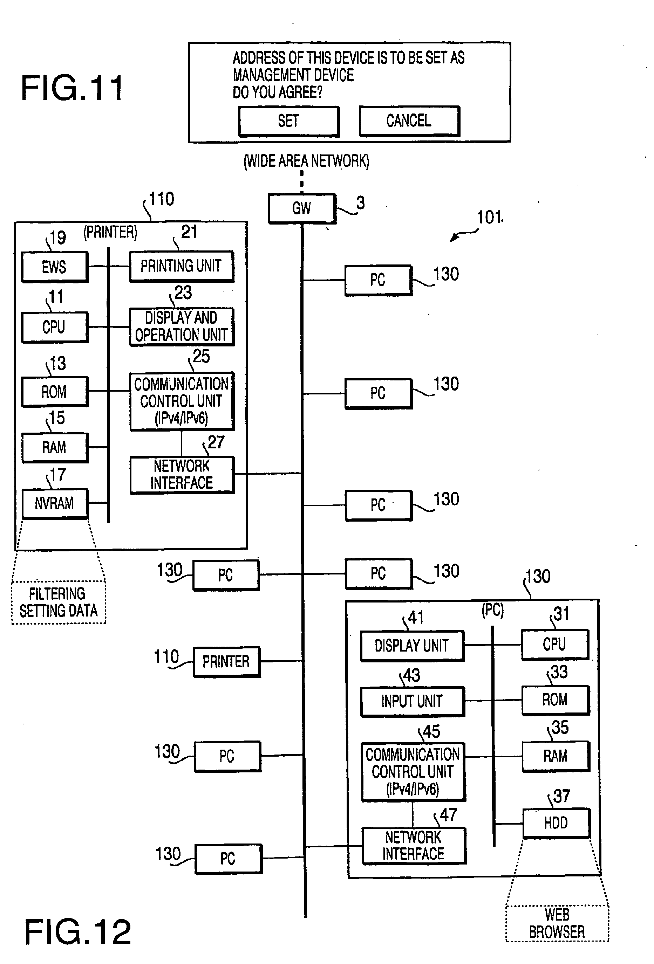

If the CPU 31 judges that an IP address of the management device has not been gotten (S610: NO), control proceeds to step S621 where the CPU 31 gets its own IP address which is stored by the communication control unit 45. Further, the CPU 31 updates the filtering setting screen by writing its own IP address to the input field A3 on the filtering setting screen as an IP address of the management device. Then, the CPU 31 displays a message indicating that its own address is to be set as an IP address of the management device (step S623). Fig. 11 illustrates an example of a message display screen (which may be displayed as a window or a dialog box) containing a message indicating that its own address is to be set as an IP address of the management device.

In the message display screen, a setting key and a cancel key are provided. After displaying the message in step S623, the CPU 31 waits until a user input representing the pressing of the setting key or a use input representing the pressing of the cancel key is received through the message display screen shown in Fig. 11. If the user input is received, control proceeds to step S640 where the CPU 31 judges whether the user input represents the pressing of the setting key.

If the user input does not represent the pressing of the setting key, i.e., the user input represents the pressing of the cancel key (S640: NO), control returns to step S550. If the user input represents the pressing of the setting key (S640: YES), control proceeds to step S650 where the CPU 31 generates a setting command containing command data for instructing the printer 10 to assign its own IP address (i.e., an IP address of the PC 30) to an IP address of the management device, and transmits the setting command to the printer 10 which has been selected through the printer selection screen. After finishing step S650, control returns to step S550 where the CPU 31 waits until a next user input is received. By this configuration, the PC 30 is able to cause the printer 10 to register its own IP address (an IP address of the PC 30) as an IP address of the management device.

In the above mentioned variation, if an IP address of the management device is not designated by the user, the PC 30 operates to set an IP address of the PC 30 (which the user currently uses) as an IP address of the management device. Such a configuration prevents the filtering function from interfering with the re-setting of the printer 10 to be performed from the PC 30 if the user erroneously designated the address range on the filtering setting screen.

Therefore, according to the variation shown in Fig. 10, a problem, that the user needs to conduct a troublesome re-setting operation, is prevented from arising when the user of the PC 30 makes a mistake of setting erroneously the address range and thereby the access from the PC 30 to the printer 10 is obstructed.

### SECOND EXAMPLE

Hereafter, a second example of the invention is described. Fig. 12 shows a system configuration of a communication system 101 according to the second example. In the communication system 101, printers 110 and PCs (personal computers) 130 are provided. The printer 110 is configured by adding the function of an EWS (embedded web server) 19 to the printer 10 in the first example. The PC 130 is configured by adding the function as a web browser to the PC 30 in the first example. Specifically, in this example, a web browser program is installed in the HDD 37. The web browser program functions, when executed by the CPU 31, to analyze a web page provided by the EWS 19 of the printer 110 and to display the web page on the display unit 41. In this example, to elements which are substantially the same as those of the first example, same reference numbers are assigned, and explanations thereof will not be repeated.

In Fig. 12, the EWS 19 is formed as a separate unit not integrated into the CPU 11. However, the EWS 19 may be formed as a dedicated unit (e.g., a microcomputer chip) or may be a functional unit accomplished by software executed by the CPU 11. In this example, the EWS 19 is treated as a task by the communication control unit 25. That is, the function of the EWS 19 is attained by software.

In this example, the reception control process shown in Fig. 4 is executed by the CPU 11 of the printer 110. In the reception control process, when data addressed to the EWS 19 is received by the network interface 27 of the printer 110, the communication control unit 25 passes the received data to the EWS 19.

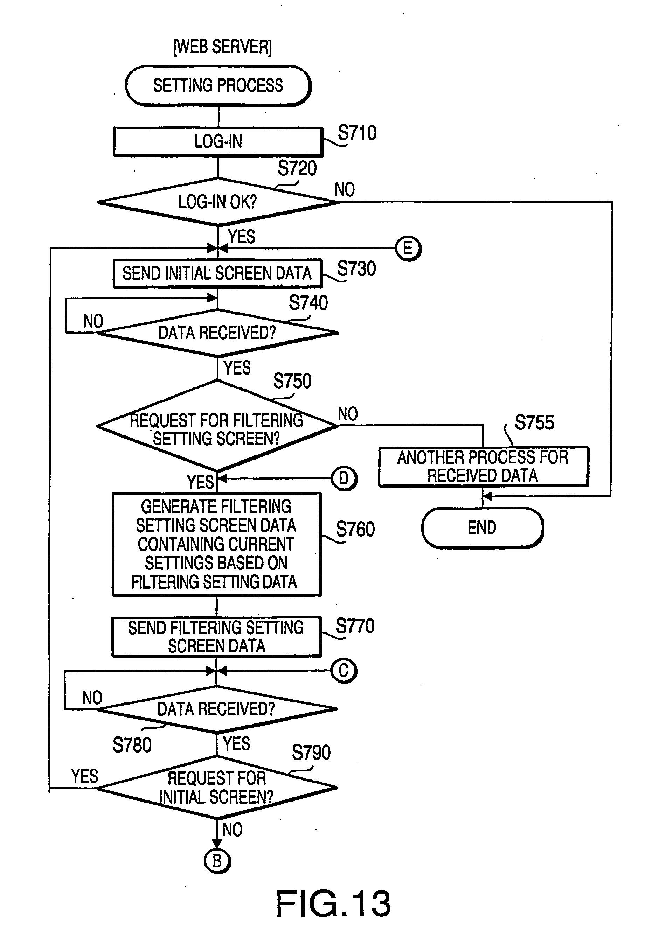

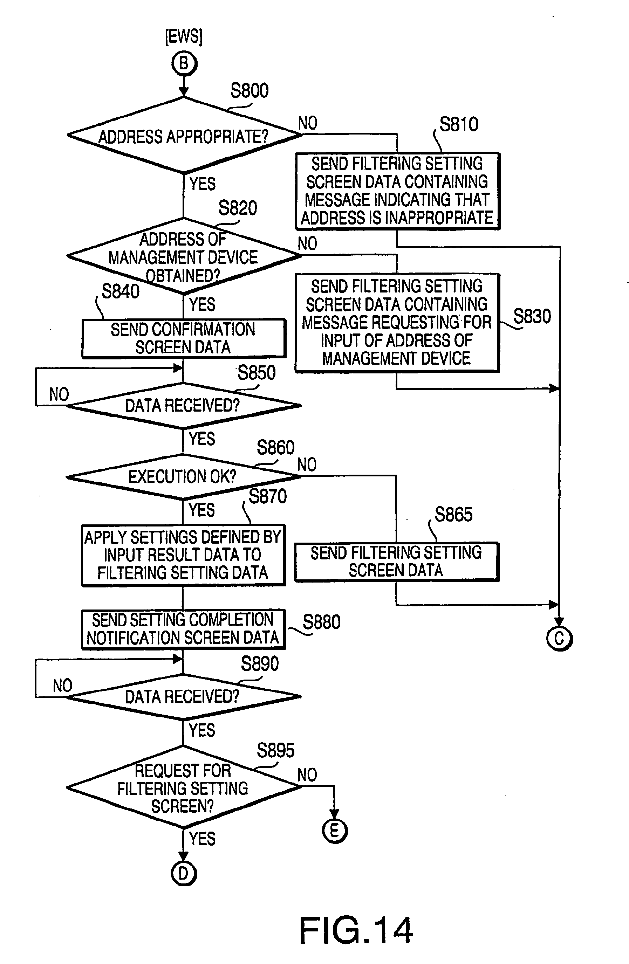

Figs. 13 and 14 show a setting process to be executed by the EWS 19. The setting process is initiated when the EWS 19 receives a connection request addressed to a program of the setting process being executed by the EWS 19, from a device (e.g., the PC 130) in the LAN.

As shown in Fig. 13, first, the EWS 19 gets authentication data such as a log-in ID from a device (the PC 130) which requested a log-in process (step S710). Then, the EWS 19 judges whether a user is an authorized user (step S720). If the user is an authorized user (S720: YES), control proceeds to step S730. If the user is not an authorized user (S720: NO), the setting process terminates.

In step S730, the EWS 19 transmits initial screen data for causing the device which transmitted the connection request to display a selection screen through which a user is able to select one of services to be provided by the EWS 19, to the device which transmitted the connection request. In the following, it is assumed that the device which transmitted the connection request to the printer 110 is the PC 130.

The initial screen data is, for example, a web page described based on an HTML (HyperText Markup Language). The services which the EWS 19 is able to provide comprise a log-out service. After transmitting the initial screen data to the PC 130, the EWS 19 waits until a request for a service selected by the user through the initial screen on the PC 130 is transmitted from the PC 130 (step S740). If the request is received (S740: YES), the EWS 19 judges whether the request corresponds to a request for a filtering setting screen (step S750). If the received request does not correspond to a request for a filtering setting screen (S750: NO), the EWS 19 executes a process corresponding to the received request (step S755). Then, the setting process terminates.

If the received request corresponds to a request for a filtering setting screen (S750: YES), the EWS 19 generates filtering setting screen data representing current settings based on the filtering setting data (step S760). Then, the EWS 19 transmits the filtering setting screen data to the PC 130 via the communication control unit 25 (step S770). In this example, the filtering setting screen data is formed as a web page, and is configured to cause the web browser of the PC 130 to display a filtering setting screen as shown in Fig. 8.

To form the filtering setting screen data using an HTML, an input tag of a check box type is written in a form tag so as to display the input field A1, and an input tag of a radio button type is written for each of the radio buttons so as to display the input field A2. Further, an input tag of a text type is written in the data for each of the input fields A3 and A4 so as to display the input fields A3 and A4, an input tag of a submit type is written in the data so as to display the setting key A5, and a button tag (i.e., a tag for transmitting a request for an initial screen) representing a link to an initial screen is written in the data so as to display the cancel key A6.

Applying current settings to the filtering setting screen data can be attained by writing current settings into the filtering setting screen data (e.g., by adding a value for controlling initial display data to an input tag). For example, a value "CHECKED" may be added to an input tag of a check box type requesting for a check to a check box, on an as needed basis, and a currently set IP address may be assigned to a parameter VALUE of the input tag of a text type.

After thus generated filtering setting screen data reflecting the current settings is transmitted to the PC 130, control proceeds to step S780 where the EWS 19 waits until data, which is transmitted from the PC 130 when the user presses the setting key or the cancel key on the filtering setting screen which is displayed by the web browser based on the filtering setting screen data, is received via the communication control unit 25. If the data is received (S780: YES), the EWS 19 judges whether the received data is a request for an initial screen (step S790).

If the received data is a request for an initial screen (S790: YES), control returns to step S730 where the EWS 19 transmits initial screen data to the PC 130 in response to the request. Then, step S740 is processed.

If the received data is not a request for an initial screen, i.e., if the received data is input result data containing the settings inputted to the filtering setting screen (S790: NO), control proceeds to step S800 where the EWS 19 judges whether each of character strings inputted to the input fields A3 and A4 represents an IP address, based on the values of the input fields A3 and A4 contained in the input result data (in this case an input field to which no character string is inputted may be neglected). If each of the input fields A3 and A4 does not represent an IP address (S800: NO), control proceeds to step S810.

In step S810, the EWS 19 generates filtering setting screen data which reflects settings presently inputted to the filtering setting screen. To the filtering setting screen data, a character string for causing the web browser to display a message indicating that an inputted IP address is unsuitable is added. The filtering setting screen data generated as above is then transmitted to the PC 130. Then, control returns to step S780.

If each of the input fields A3 and A4 represents an IP address (S800: YES), the EWS 19 judges whether an IP address of the management device has been gotten by judging whether a value (i.e., an IP address of the management device) for the input field A3 is contained in the input result data (step S820).

If an IP address of the management device has not been gotten (S820: NO), control proceeds to step S830 where the EWS 19 generates filtering setting screen data reflecting the settings presently inputted to the filtering setting screen. To the filtering setting screen data, a character string for causing the web browser to display a message requesting the user to input an IP address of the management device is added. The filtering setting screen data generated as above is transmitted to the PC 130. Then, control returns to step S780.

If an IP address of the management device has been gotten (S820: YES), control proceeds to step S840 where the EWS 19 transmits confirmation screen data to the PC 130. The confirmation screen data is configured to cause the web browser to display a confirmation screen comprising a message requesting the user to confirm whether to make settings using data inputted to the filtering setting screen. The confirmation screen data may be formed as a web page.

In the confirmation screen data, data for displaying a setting key and a cancel key on the confirmation screen is contained. The setting key functions to transmit a value indicating that application of the settings is accepted (i.e., execution OK). The cancel key functions to transmit a value indicating that application of the settings is not accepted (i.e., execution NG). The data for displaying the setting key and the cancel key may comprise a button tag fro transmitting a value "execution OK" when pressed and a button tag for transmitting a value "execution NG" when pressed. Data containing a value "execution OK" is transmitted from the PC 130 if the user presses the setting key through the confirmation screen. Data containing a value "execution NO" is transmitted from the PC 130 if the user presses the cancel key through the confirmation screen.

The EWS 19 waists until data containing the value "execution OK" or data containing the value "execution NG" from the PC 130 is received (step S850). If the data is received (S850: YES), the EWS 19 judges whether the received data contains the value "execution OK" (step S860).

If the received data does not contain the value "execution OK" (S860: NO), control proceeds to step S865 where the EWS 19 generates the filtering setting screen data reflecting the settings which are presently inputted to the filtering setting screen and are defmed by the input result data. The filtering setting screen data generated as above is transmitted to the PC 130 via the communication control unit 25 (step S865). Then, control returns to step S780.

If the received data contains the value "execution OK" (S860: YES), control proceeds to step S870 where the EWS 19 updates the filtering setting data stored in the NVRAM 17 in accordance with the settings defined by the input result data, so that the update of the settings can be attained according to the user's intension.

After the update of the filtering setting data is finished, control proceeds to step S880 where the EWS 19 transmits setting completion notification screen data for causing the web browser to display a setting completion notification screen representing the completion of the update of settings, to the PC 130. The setting completion notification screen data may be configured as a web page. The setting completion notification screen data comprises a link to the filtering setting screen, and a link to the initial screen. If the user selects the link to the filtering setting screen through the web browser, the request for the filtering setting screen is transmitted from the PC 130. If the user selects the link to the initial screen through the web browser, the request for the initial screen is transmitted from the PC 130.

After transmitting the setting completion notification screen data, the EWS 19 waits until the request for the filtering setting screen or the request for the initial screen from the PC 130 is received (step S890). If the request for the filtering setting screen or the request for the initial screen from the PC 130 is received (S890: YES), the EWS 19 judges whether the received data is the request for the filtering setting screen (step S895).

If the received data is the request for the filtering setting screen (S895: YES), control returns to step S760. If the received data is the request for the initial screen (S895: NO), control returns to step S730.

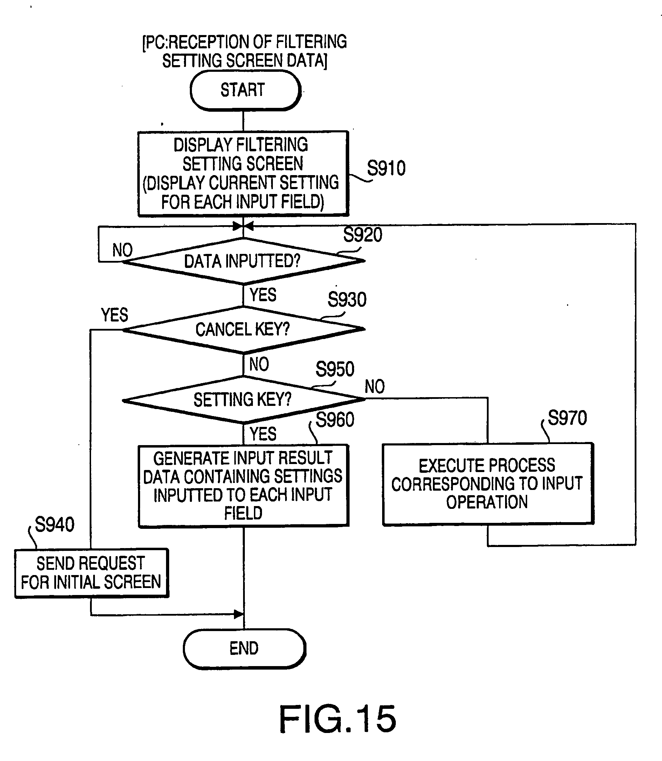

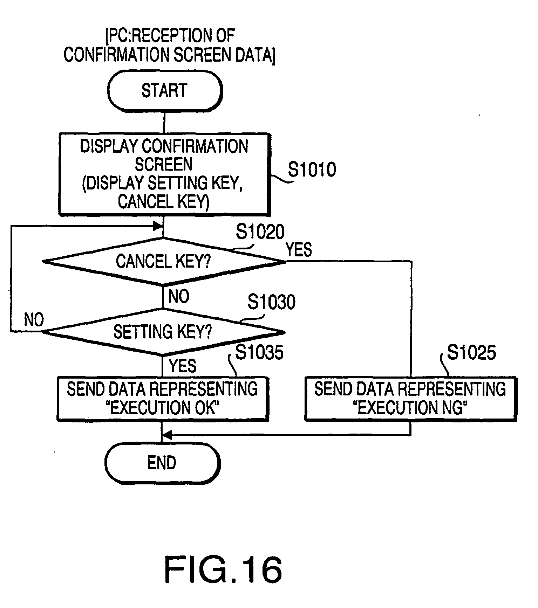

Hereafter, operations of the device (i.e., the PC 130) which transmitted the connection request to the printer 110 is described. Fig. 15 is a flowchart illustrating a process to be executed by the CPU 31 of the PC 130 after the PC 130 receives the filtering setting screen data. Fig. 16 is a flowchart illustrating a process to be executed by the CPU 31 of the PC 130 after the PC 130 receives the confirmation screen data.

As shown in Fig. 15, after receiving the filtering setting screen data, the CPU 31 of the PC 130 displays a filtering setting screen in a display area of the web browser (step S910). Then, the CPU 31 waits a user input to the filtering setting screen is received (step S920). If the user input is received (step S910: YES), control proceeds to step S930 where the CPU 31 judges whether the user input corresponds to the pressing of the cancel key on the filtering setting screen. If the received user input corresponds to the pressing of the cancel key (S930: YES), the CPU 31 transmits a request for an initial screen to the EWS 19 via the communication control unit 45 (step S940).

If the received user input does not correspond to the pressing of the cancel key (S930: NO), control proceeds to step S950 where the CPU 31 judges whether the user input corresponds to the pressing of the setting key on the filtering setting screen. If the user input corresponds to the pressing of the setting key on the filtering setting screen (step S950 :YES), the CPU 31 generates input result data containing settings currently displayed in the input fields A1 to A4on the filtering setting screen, and transmits the input result data to the EWS 19 via the communication control unit 45 (step S960).

If the user input does not correspond to the pressing of the setting key on the filtering setting screen (step S950 :NO), the CPU 31 executes a process corresponding to the user input and updates the filtering setting screen (step S970). The process of step S970 is the same as that of step S580. After step S970 is processed, control returns to step S920. After step S940 or S960 is processed, the process shown in Fig. 15 terminates.

As shown in Fig. 16, after receiving the confirmation screen data, the CPU 31 of the PC 130 displays a confirmation screen in a display area of the web browser (step S1010). The confirmation screen comprises a message requesting a user to confirm whether to make settings using data inputted to the filtering setting screen (see Fig. 9C). Then, the CPU 31 waits until a user input corresponding to the pressing of the cancel key on the confirmation screen or a user input corresponding to the pressing of the setting key on the confirmation screen is inputted by the user through the input unit 43 (step S1020, S1030).

If the user input corresponding to the pressing of the cancel key is received (S1020: YES), the CPU 31 generates transmission data containing data representing "execution NG", and transmits the transmission data to the EWS 19 via the communication control unit 45 (step S1025). If the user input corresponding to the pressing of the setting key is received (S1030: YES), the CPU 31 generates transmission data containing data representing "execution OK", and transmits the transmission data to the EWS 19 via the communication control unit 45 (step S1035).

As described above, the printer 110 operates to accept data having a source address identical with the IP address of the management device and to provide the data to a corresponding task regardless of whether the source address is within the address range defined by the target range setting data in a state where the filtering function is set ON. Therefore, according to the second example, even if the user (administrator) erroneously inputs an inappropriate address range to the filtering setting screen, the user is able to access the printer 110 through the LAN from the PC 130 which is registered as a management device. By registering the PC 130 having the function setting program as a management device, it is possible to apply the settings to the printer 110 again through the network even if the user made a mistake of inputting an inappropriate address.

Similarly to the first example, if the input result data is transmitted from the PC 130 after the setting key on the filtering setting screen is pressed, the printer 110 (the EWS 19) judges whether an IP address of the management device has been inputted so as to prevent the filtering function from switching to ON in a state where the management device is defined. If an IP address of the management device has been inputted, the EWS 19 updates the settings of the printer 110 in accordance with the input result data. If an IP address of the management device has not been inputted, the EWS 19 transmits the filtering setting screen data, containing the message requesting the user to input an IP address of the management device, to the PC 130 so that the settings of the printer 110 is not updated until an IP address of the management device is inputted.

Therefore, according to the example, it is possible to access the printer 110 reliably from a device registered as a management device (i.e., the PC 130). It is also possible to reliably prevent a problem that the PC 130 becomes unable to access the printer 110 from occurring in the communication system.

Hereafter, a variation of the second example is described. In the above mentioned second example, if an IP address of the management device is not inputted to the input field A3 at a time when the setting key on the filtering setting screen is pressed, the printer 110 (EWS 19) displays a message requesting the user to input an IP address of the management device to urge the user to input an IP address of the management device. It is preferable that a device currently operated by the user (i.e., the PC 130) is automatically registered as a management device. Therefore, it is preferable that the EWS 19 is configured such that an IP address of the PC 130 which logged in the EWS 19 is automatically registered as an IP address of the management device if an IP address of the management device is not inputted to the input field A3.

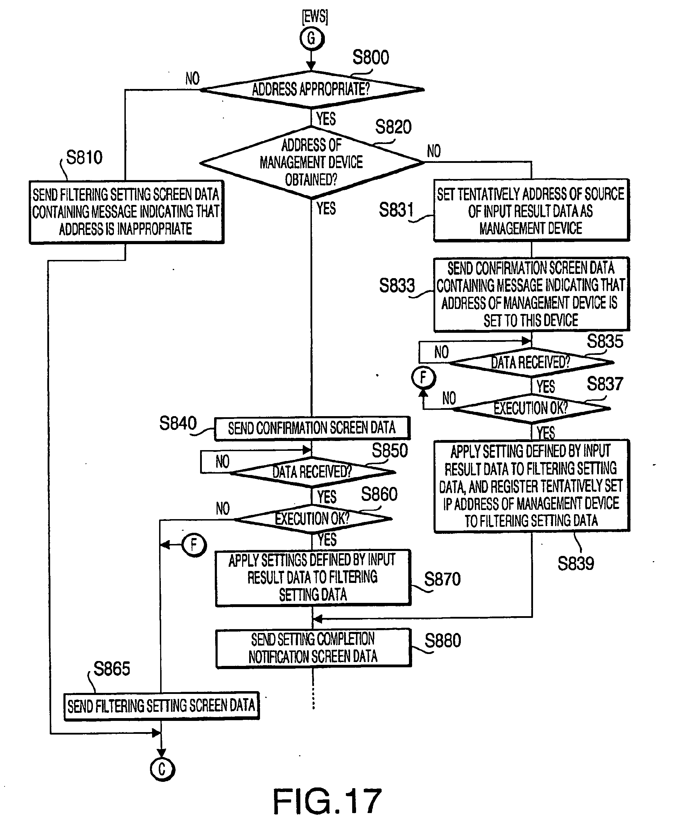

Such a configuration may me accomplished by modifying the setting process shown Fig. 14. More specifically, the variation of the second example is accomplished by replacing step S830 of Fig. 14 with steps S831, S833, S835, S837 and S839 shown in Fig. 17.

Fig. 17 is a flowchart of a part of the setting process to be executed in place of the process shown in Fig. 14. If the EWS 19 judges that an IP address of the management device has not been gotten because a value has not been inputted to the input field A3 in the received input result data (S820: NO), control proceeds to step S831 where the EWS 19 tentatively assigns a source address (i.e., an IP address of the device which transmitted the connection request) to an IP address of the management device.

Next, in step S833, the EWS 19 sends confirmation screen data for causing the web browser to display a confirmation screen, to the source device of the connection request. Hereafter, it is assumed that the source device of the connection request is the PC 130. The confirmation screen comprises a message requesting the user to confirm whether to make settings using data inputted to the filtering setting screen, and a message indicating that an IP address of the device being used by the user is to be assigned to an IP address of the management device. The confirmation screen data may be formed as a web page.

In the confirmation screen data, data to be used by the web browser to display a setting key and a cancel key on the confirmation screen is contained. The data for displaying the setting key and the cancel key may comprise a button tag for transmitting a value "execution OK" when pressed and a button tag for transmitting a value "execution NG" when pressed. Data containing a value "execution OK" is transmitted from the PC 130 if the user pressed the setting key through the confirmation screen. Data containing a value "execution NG" is transmitted from the PC 130 if the user pressed the cancel key through the confirmation screen.

In step S835, the EWS 19 waits until data containing "execution OK" or data containing "execution NG" from the PC 130 is received. If the data is received (S835: YES), the EWS 19 judges whether the received data contains "execution OK" (step S837). If the received data does not contain "execution OK" (S837: NO), control proceeds to step S865 where the EWS 19 generates the filtering setting screen data reflecting the settings which are presently inputted to the filtering setting screen and are defined by the input result data. The filtering setting screen data generated as above is transmitted to the PC 130 via the communication control unit 25 (step S865). Then, control returns to step S780.

If the received data contains "execution OK" (S837: YES), the EWS 19 updates the filtering setting data stored in the NVRAM 17 in accordance with the settings represented by the input result data so as to reflect the settings designated by the user and to assign the IP address tentatively set in step S831 to an IP address of the management device (step S839). Then, control proceeds to step S880 where setting completion notification screen data is transmitted to the PC 130.

If it is judged in step S820 that an IP address of the management device has been gotten (S820: YES), control proceeds to step S840.

In the above mentioned variation, if an IP address of the management device is not designated by the user, an IP address of the PC 130 (which the user currently uses) is defined as an IP address of the management device. Such a configuration prevents the filtering function from interfering with the re-setting of the printer 110 to be performed from the PC 130 if the user erroneously designated the address range on the filtering setting screen.

Therefore, according to the variation shown in Fig. 17, a problem, that the access from the PC 130 to the printer 110 is obstructed and thereby the user needs to conduct a troublesome re-setting operation, is prevented from arising when the user of the PC 130 makes a mistake of setting erroneously the address range.

### THIRD EXAMPLE

In the above mentioned second example, the change of the settings of the printer 110 is executed by the EWS 19. However, the printer 110 may additionally be provided with the function of executing the setting change process shown in Fig. 5 so that the change of settings can be attained from the PC 130 using the function setting process. In this case, the change of settings of the printer 110 can be attained in one of two different ways from the PC 130. Such a configuration is very convenient for the user. Hereafter, a communication system 201 capable of providing two different ways for changing settings of the printer 110 from the PC 130 is described as a third example of the present invention.

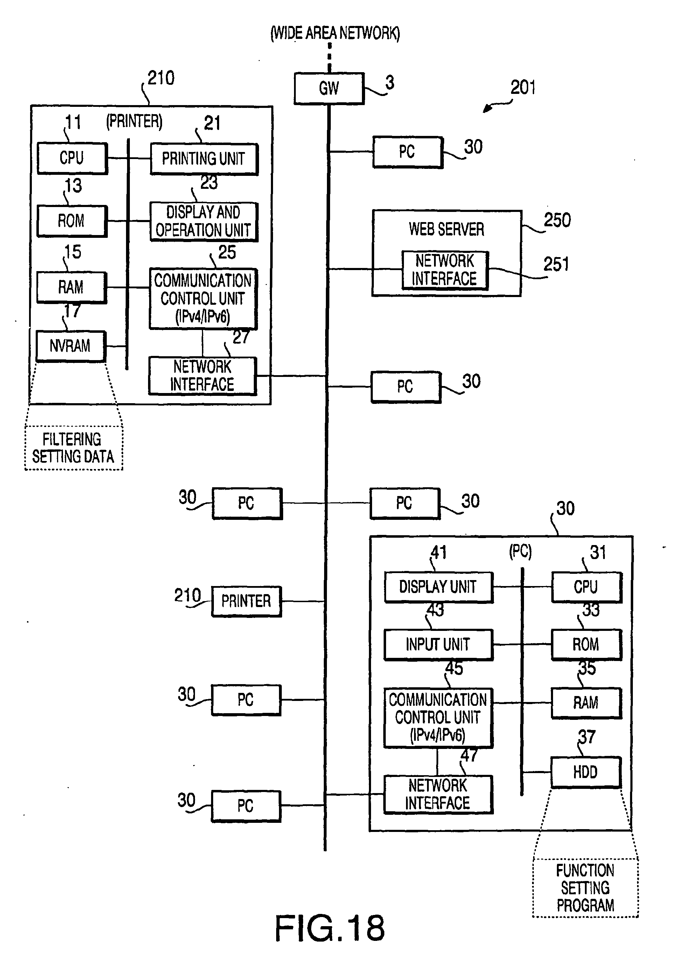

Fig. 18 illustrates a configuration of the communication system 201 according to the third example. In the communication system 201, printers 210 not having a function as the EWS 19 are provided in place of the printers 110, and a web server 250 having the function as the EWS 19 is provided.

In Fig. 18, to elements which are the same as those of the above mentioned example, the same reference numbers are assigned, and explanations there of will not be repeated. Since the configuration of the printer 210 is substantially the same as the printer 10 of the first example, the explanation thereof will not be described. In the following, explanations are made principally for the web server 250.

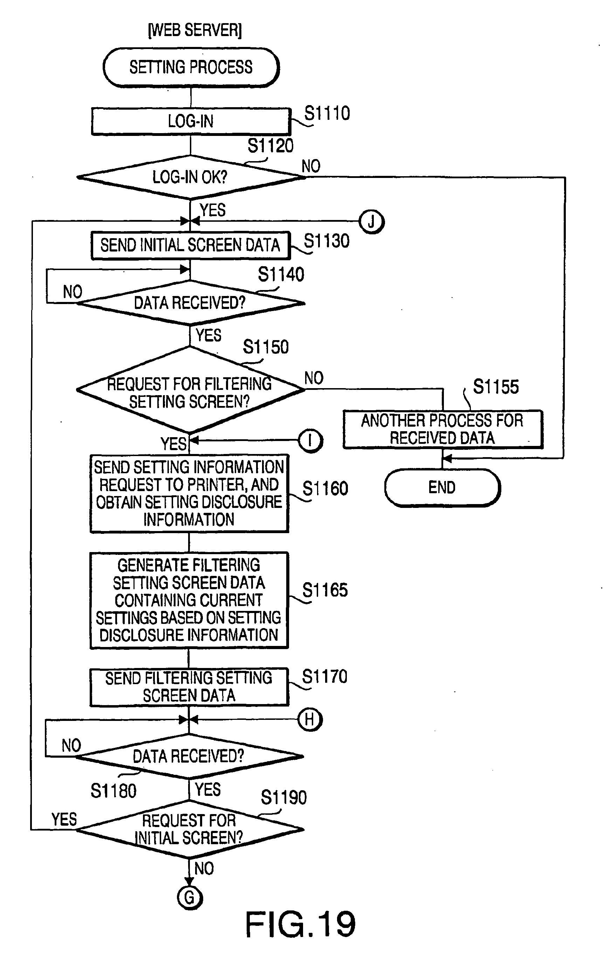

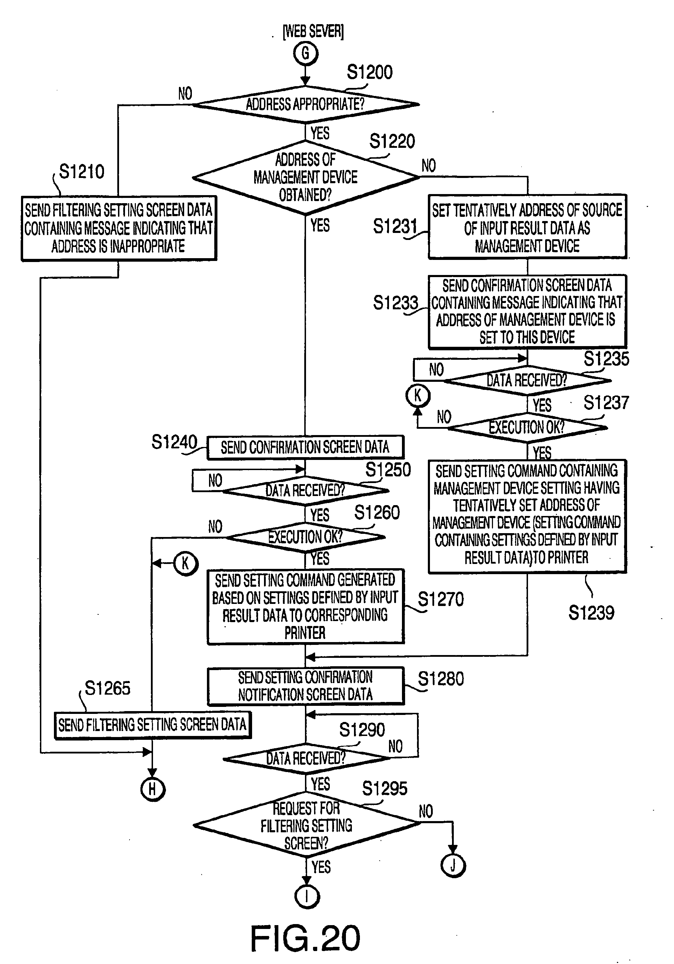

Figs. 19 and 20 show a setting process to be executed by the web server 250 (i.e., executed under control of a CPU (not shown) of the web server 250). First, the web server 250 executes a log-in process (e.g., to receive authentication data such as a log-in ID of a device which transmitted a connection request) (step S110). Then, the web server 250 judges whether a user is an authorized user in accordance with the authentication data (step S 1120). If the user is an authorized user (S1120: YES), control proceeds to step S1130. If the user is not an authorized user (S1120: NO), the setting process terminates. In this example, data representing an operation target (i.e., the printer 210) is also transmitted together with the authentication data from a source device of the transmission request. In the following, it is assumed that the source device of the connection request is the PC 30.

In step S 1130, the web server 250 transmits initial screen data for causing the PC 30 to display a selection screen through which the user is able to select one of services (comprising a log-out service) to be provided by the web server 250, to the PC 30. The initial screen data may be formed as a web page. Then, the web server 250 waits until a request for a service selected by the user through the initial screen is transmitted from the PC 30 (step S 1140). If the request for a service is received (step S1140: YES), control proceeds to step S1150 where the web server 250 judges whether the request corresponds to a request for a filtering setting screen.

If the request does not correspond to a request for a filtering setting screen (S1150: NO), control proceeds to step S 1155 where a process for the request is executed. Then, the setting process terminates.

If the request corresponds to a request for a filtering setting screen (S 1150: YES), the web server 250 transmits a setting data request to the operation target (printer 210), and thereafter receives setting disclosure data representing current settings from the printer 210 (step S 1160). Next, the web server 250 generates filtering setting screen data containing the current settings in accordance with the gotten setting disclosure data (step S 1165). Then, the web server 250 transmits the filtering setting screen data to the PC 30 via a network interface 251 having a function of interfacing the web server 250 with the LAN (step S1170).

After the filtering screen data is transmitted, control proceeds to step S1180 where the web server 250 waits until data, which is transmitted from the PC 30 when the user presses the setting key or the cancel key on the filtering setting screen which is displayed by the web browser based on the filtering setting screen data, is received via the network interface 251. If the data is received (S1180: YES), the web server 250 judges whether the received data is a request for an initial screen (step S 1190).

If the received data is a request for an initial screen (S 1190: YES), control returns to step S1130 where the web server 250 transmits initial screen data to the PC 30. Then, control proceeds to step S 1140. If the received data is not a request for an initial screen (i.e., if the received data is input result data containing settings inputted to the filtering setting screen) (S1190: NO), control proceeds to step S1200 where the web server 250 judges whether each of character strings inputted to the input fields A3 and A4 represents an IP address, based on the values of the input fields A3 and A4 contained in the input result data (in this case an input field to which no character string is inputted may be neglected). If each of the input fields A3 and A4 does not represent an IP address (S1200: NO), control proceeds to step S1210.

In step S1210, the web server 250 generates filtering setting screen data which reflects settings presently inputted to the filtering setting screen. To the filtering setting screen data, a character string for causing the web browser to display a message indicating that an inputted IP address is unsuitable is added. The filtering setting screen data generated as above is then transmitted to the PC 30. Then, control returns to step S 1180.

If each of the input fields A3 and A4 represents an IP address (S1200: YES), the web server 250 judges whether an IP address of the management device has been gotten by judging whether an value (i.e., an IP address of the management device) for the input field A3 is contained in the input result data (step S1220).

If the web server 250 judges that an IP address of the management device has not been gotten (S1220: NO), control proceeds to step S1231 where the web server 250 tentatively assigns a source address contained in the received data (i.e., an IP address of the source device of the connection request) to an IP address of the management device.

Next, in step S1233, the web server 250 sends confirmation screen data for causing the web browser to display a confirmation screen, to the source device of the connection request. The confirmation screen comprises a message requesting the user to confirm whether to make settings using data inputted to the filtering setting screen, and a message indicating that an IP address of the device being used by the user is to be assigned to an IP address of the management device. The confirmation screen data may be formed as a web page.

In the confirmation screen data, data to be used by the web browser to display a setting key and a cancel key on the confirmation screen is contained. The data for displaying the setting key and the cancel key may comprise a button tag for transmitting a value "execution OK" when pressed and a button tag for transmitting a value "execution NG" when pressed. Data containing a value "execution OK" is transmitted from the PC 30 if the user presses the setting key through the confirmation screen. Data containing a value "execution NG" is transmitted from the PC 30 if the user presses the cancel key through the confirmation screen.

In step S1235, the web server 250 waits until data containing "execution OK" or data containing "execution NG" from the PC 30 is received. If the data is received (S1235: YES), the web server 250 judges whether the received data contains "execution OK" (step S1237). If the received data does not contain "execution OK" (S1237: NO), control proceeds to step S1265 where the web server 250 generates the filtering setting screen data reflecting the settings which are presently inputted to the filtering setting screen and are defined by the input result data. The filtering setting screen data generated as above is transmitted to the PC 30 via the network interface 251. Then, control returns to step S 1180.

If the received data contains "execution OK" (S1237: YES), control proceeds to step S1239 where the web server 250 stores function on/off setting, mode setting and target range setting into a setting command, based on the settings defined by the input result data, and stores management device setting representing an IP address of the management device set tentatively in step S1231 into the setting command. The setting command generated as above is transmitted to the operation target (i.e., the printer 210) via the network interface 251.

After the setting command is transmitted from the web server 250, the printer 210 changes the settings reflecting setting data inputted by the user, and an IP address of the device (the source device of the connection request) which accessed the web server 250 is written in the NVRAM 17 as an IP address of the management device. After step S1239 is processed, control proceeds to step S1280 where setting completion notification screen data is transmitted to the PC 30. The setting completion notification screen data may be formed as a web page.

If the web server 250 judges that an IP address of the management device has been gotten (S1220: YES), control proceeds to step S1240 where the web server 250 transmits confirmation screen data to the PC 30. The confirmation screen data is configured to cause the web browser to display a confirmation screen comprising a message requesting the user to confirm whether to make settings using data inputted to the filtering setting screen. The confirmation screen data may be formed as a web page.

In the confirmation screen data, data for displaying a setting key and a cancel key on the confirmation screen is contained. The setting key functions to transmit a value indicating that application of the settings is accepted (i.e., execution OK). The cancel key functions to transmit a value indicating that application of the settings is not accepted (i.e., execution NG). Data containing a value "execution OK" is transmitted from the PC 30 if the user pressed the setting key through the confirmation screen. Data containing a value "execution NO" is transmitted from the PC 30 if the user pressed the cancel key through the confirmation screen.

The web server 250 waists until data containing the value "execution OK" or data containing the value "execution NG" from the PC 30 is received (step S1250). If the data is received (S1250: YES), the web server 250 judges whether the received data contains the value "execution OK" (step S1260).

If the received data does not contain the value "execution OK" (S1260: NO), control proceeds to step S1265 where the web server 250 generates the filtering setting screen data reflecting the settings which are presently inputted to the filtering setting screen and are defined by the input result data. The filtering setting screen data generated as above is transmitted to the PC 30 via the network interface 251 (step S1265). Then, control returns to step S1180.

If the received data contains the value "execution OK" (S1260: YES), control proceeds to step S1270 where the web server 250 stores function on/off setting, mode setting, management device setting and target range setting into a setting command, in accordance with the settings defmed by the input result data. The setting command generated as above is transmitted to the operation target (i.e., the printer 210) via the network interface 251. By transmitting the setting command from the web server 250 to the printer 210, it becomes possible for the printer 210 to change the settings reflecting setting data inputted by the user.

After step S1270 is finished, control proceeds to step S1280 where the web server 250 transmits setting completion notification screen data to the PC 30. The setting completion notification screen data comprises a link to the filtering setting screen, and a link to the initial screen. If the user selects the link to the filtering setting screen through the web browser, the request for the filtering setting screen is transmitted from the PC 30 to the web browser 250. If the user selects the link to the initial screen through the web browser, the request for the initial screen is transmitted from the PC 30 to the web browser 250.

In step S1290, the web browser 250 waits until a request for the filtering setting screen or a request for the initial screen from the PC 30 is received. If a request for the filtering setting screen or a request for the initial screen is received (S1290: YES), control proceeds to step S 1295 where the web server 250 judges whether the received request is the request for the filtering setting screen. If the received request is the request for the filtering setting screen (S1295: YES), control returns to step S 1160. If the received request is not the request for the filtering setting screen (S1295: NO), control returns to step S1130.

In the above mentioned example, if an IP address of the management device is not designated by the user, the PC 30 operates to set an IP address of the PC 30 (which the user currently uses) as an IP address of the management device. Such a configuration prevents the filtering function from interfering with the re-setting of the printer 210 to be performed from the PC 30 if the user erroneously designated the address range on the filtering setting screen.

Therefore, according to the example, a problem, that the access from the PC 30 to the printer 210 is obstructed and hereby the user needs to conduct a troublesome re-setting operation, is prevented from arising when the user of the PC 30 makes a mistake of setting erroneously the address range.

For example, by installing the function setting program to the PC 30 functioning as a management device, it is possible to change the settings of the printer 210 directly from the PC 30 without using the web server 250. Therefore, according to the example, the change of settings can be attained reliably without being affected by mistakes made by the user.

Although the present invention has been described in considerable detail with reference to certain preferred examples thereof, other examples are possible.

In the above mentioned examples, the filtering function is executed based on an IP address. However, the filtering function may be may be executed based on a MAC address, in particular based on LAA (Locally Administered Addresses). The above mentioned example may be applied to a communication system in which received data is filtered by LAA.

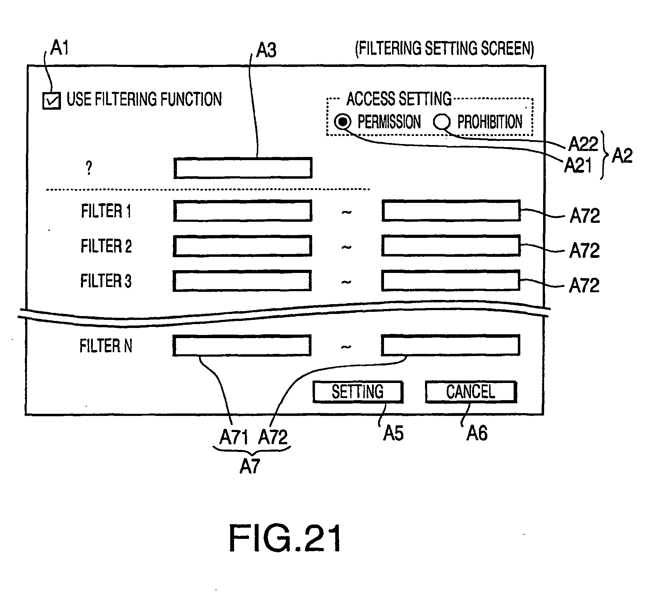

In the above mentioned example, the filtering setting screen is configured such that an address range is described using data on an IP address and mask data. However, an address range may be defined in the filtering setting screen by a different way, for example, by using an expression of "from address xxxx to an address yyyyy". In this case, the filtering setting screen may be formed as shown in Fig. 21. In the filtering setting screen shown in Fig. 21, an input field A7 comprising a start address input field A71 and an end address field A72 is provided in place of the input field A4. It is understood that by using the filtering setting screen shown in Fig. 21, the above mentioned advantages of the examples can also be attained.

The TCP/IP communications performed in the above mentioned communication system may be based on IPv4 or IPv6.

## Claims

1. A communication device (10), comprising:
a network interface (27) that interfaces the communication device (10) with a network;
a reception judgment unit (25) configured to judge whether to accept data received by the network interface (27) from the network in accordance with predetermined restriction data defining at least one authorized device and/or at least one unauthorized device; and
a process execution unit (11) configured to execute a process in response to the reception judgment (25) unit judging to accept said data, such that if setting request data for requesting execution of change of settings is received through the network interface (27) from the network, the process execution unit (11) changes settings of the communication device in accordance with the setting request data; and
wherein the reception judgment unit (25) is further configured to accept data received by the network interface (27) from the network if a source device of data corresponds to a predetermined management device serving to manage the communication device (10) in the network regardless of a judgment result made by the reception judgment unit (25) in accordance with the predetermined restriction data;
**characterized in that**:
the communication device (10) further comprises an automatic setting unit configured such that in response to the data on an unauthorized device contained in the setting request data being set as the predetermined restriction data in a state where the setting request data does not contain setting of the predetermined management device, the automatic setting unit sets a source device of the setting request data for the setting of the predetermined management device.

2. The communication device (10) according to claim 1, wherein the reception judgment unit (25) is configured to identify a source device of data received by the network interface (27) and to use an identification result to judge whether to accept data received by the network interface (27).

3. The communication device (10) according to claim 2, wherein:
an address of a source device of data is contained in data transmitted from a device to the communication device (10) through the network;
the reception judgment unit (25) identifies a source device of data received by the network interface (27) by using an address of a source device contained in data received by the network interface (27).

4. The communication device (10) according to claim 3, further comprising a storage unit (17) storing an address of the predetermined management device,
wherein the reception judgment unit (25) judges that a source device of data received by the network interface (27) corresponds to the predetermined management device if an address contained in data received by the network interface (27) is identical with the address of the predetermined management device stored in the storage unit (17).

5. The communication device (10) according to claim 1, wherein:
the process execution unit (11) is configured such that in response to data on an unauthorized device being contained in the setting request data, the process execution unit (11) changes the settings of the communication device (10) so that the data on the unauthorized device contained in the setting request data is set as the predetermined restriction data;
the reception judgment device (25) judges not to accept data received by the network interface (27) in response to a source device of the data received by the network interface (27) corresponding to the at least one unauthorized device defined by the predetermined restriction data, and judges to accept data received by the network interface (27) in response to a source device of the data received by the network interface (27) not corresponding to the at least one unauthorized device defined by the predetermined restriction data; and
the reception judgment unit (25) judges to accept data received by the network interface (27) in response to a source device of the data received by the network interface (27) corresponding to the predetermined management device regardless of a judgment result made by the reception judgment unit (25) in accordance with the predetermined restriction data.

6. The communication device (10) according to claim 1, wherein:
the process execution unit (11) is configured such that in response to data on an authorized device being contained in the setting request data, the process execution unit (11) changes the settings of the communication device (10) so that the data on the authorized device contained in the setting request data is set as the predetermined restriction data;
the reception judgment device (25) judges to accept data received by the network interface (27) in response to a source device of the data received by the network interface (27) corresponding to the at least one authorized device defined by the predetermined restriction data, and not to accept data received by the network interface (27) in response to a source device of the data received by the network interface (27) is not corresponding to the at least one authorized device defined by the predetermined restriction data; and
the reception judgment unit (25) judges to accept data received by the network interface (27) in response to a source device of the data received by the network interface (27) corresponding to the predetermined management device regardless of a judgment result made by the reception judgment unit (25) in accordance with the predetermined restriction data.

7. The communication device (10) according to claim 6, further comprising an automatic setting unit configured such that in response to the data on the authorized device contained in the setting request data being set as the predetermined restriction data in a state where the setting request data does not contain setting of the predetermined management device, the automatic setting unit sets a source device of the setting request data for the setting of the predetermined management device.

8. A management system (1) comprising a communication device (10) according to any preceding claim and a data processing device (30) having a function of managing the communication device.

9. The management system (1) according to claim 8,
wherein the data processing device (30) comprises:
a first setting unit configured to set the predetermined management device to the communication device (10) in accordance with setting regarding the predetermined management device inputted through an input device (43);
a second setting unit configured to set the predetermined restriction data to the communication device in accordance with setting regarding the predetermined restriction data inputted through the input device (43); and
a setting judgment unit configured to judge whether the setting regarding the predetermined management device has been designated through the input device (43) before the second setting unit executes a setting operation.

10. The management system (1) according to claim 9, wherein the data processing device (30) further comprises a notification unit configured such that if the setting judgment unit judges that the setting regarding the predetermined management device has not been designated, the notification unit notifies a user that the predetermined management device has not been set.

11. The management system (1) according to claim 10, wherein the notification unit is configured to stop the setting operation to be executed by the second setting unit in addition to notifying the user that the predetermined management device has not been set.

12. The management system (1) according to claim 9,
wherein the process execution unit (11) of the communication device (10) is configured such that if setting request data requesting for execution of change of settings is received through the network interface (27) from the network, the process execution unit (11) changes settings of the communication device (10) in accordance with the setting request data;
wherein the data processing device (30) comprises a network interface (47) that interfaces the data processing device (30) with the network,
wherein the first setting unit sets the predetermined management device to the communication device (10) by transmitting setting request data containing the setting regarding the predetermined management device inputted through the input device (43) to the communication device (10) through the network,
wherein the second setting unit sets the predetermined restriction data to the communication device (10) by transmitting setting request data containing the setting regarding the at least one unauthorized device to the communication device (10) through the network.

13. The management system (1) according to claim 9, wherein the data processing device (30) further comprises an automatic setting unit configured such that if the setting judgment unit judges that the setting regarding the predetermined management device has not been designated, the automatic setting unit sets setting of the predetermined management device to the communication device (10) by transmitting setting request data containing the setting of the predetermined management device to the communication device (10).

14. The management system (1) according to any of claims 8 to 13,
wherein the data processing device (30) comprises:
a setting judgment unit configured to judge whether the setting regarding the predetermined management device has been designated before the second setting unit executes a setting operation; and
an automatic setting unit configured such that if the setting judgment unit judges that the setting regarding the predetermined management device has not been designated, the automatic setting unit sets a source device of data of the setting regarding the predetermined restriction data for the predetermined management device.

15. A method for network communications to be performed by a computer having a network interface (27) interfacing the computer with a network, the method comprising the steps of:
judging whether to accept data received by the network interface (27) from the network in accordance with predetermined restriction data defining at least one authorized device and/or at least one unauthorized device; and
executing a process in response to data being judged to be accepted, such that if setting request data for requesting execution of change of settings is received through the network interface (27) from the network, the process changes settings of the communication device in accordance with the setting request data; and
wherein, in the judging step, it is judged to accept data received by the network interface (27) from the network if a source device of data received by the network interface (27) corresponds to a predetermined management device serving to manage the computer regardless of a judgment result made by the judging step in accordance with the predetermined restriction data,
**characterized in that**:
in response to the data on an unauthorized device contained in the setting request data being set as the predetermined restriction data in a state where the setting request data does not contain setting of the predetermined management device, setting a source device of the setting request data for the setting of the predetermined management device.

16. The method according to claim 15, further comprising identifying a source device of data received by the network interface (27) so that an identification result is used in the judging step.

17. A computer program product comprising computer readable instructions causing the computer, when executed, to perform the steps of the method according to claim 15 or 16.

## Patentansprüche

1. Kommunikationsvorrichtung (10) mit:
einer Netzwerkschnittstelle (27), die eine Schnittstelle der Kommunikationsvorrichtung (10) mit einem Netzwerk bildet;
einer Aufnahmebestimmungseinheit (25), die so konfiguriert ist, dass sie bestimmt, ob Daten akzeptiert werden, die durch die Netzwerkschnittstelle (27) von dem Netzwerk aufgenommen werden, und zwar gemäß vorbestimmten Beschränkungsdaten, die zumindest eine autorisierte Vorrichtung und/oder zumindest eine unautorisierte Vorrichtung definieren; und
einer Prozessausführungseinheit (11), die so konfiguriert ist, dass sie einen Prozess als Reaktion auf die Aufnahmebestimmungseinheit (25) ausführt, die das Annehmen der Daten bestimmt, so dass, falls Einstellungsanforderungsdaten zum Fordern einer Ausführung von Änderungen von Einstellungen durch die Netzwerkschnittstelle (27) von dem Netzwerk aufgenommen werden, die Prozessausführungseinheit (11) Einstellungen der Kommunikationsvorrichtung gemäß den Einstellungsanforderungsdaten ändert; und
wobei die Aufnahmebestimmungseinheit (25) des Weiteren so konfiguriert ist, dass sie Daten akzeptiert, die durch die Netzwerkschnittstelle (27) von dem Netzwerk aufgenommen werden, falls eine Quellenvorrichtung der Daten einer vorbestimmten Verwaltungsvorrichtung entspricht, die zum Verwalten der Kommunikationsvorrichtung (10) in dem Netzwerk dient, und zwar ungeachtet von einem Bestimmungsergebnis, das durch die Aufnahmebestimmungseinheit (25) gemäß den vorbestimmten Beschränkungsdaten gemacht wird;
**dadurch gekennzeichnet, dass**:
die Kommunikationsvorrichtung (10) des Weiteren eine automatische Einstellungseinheit aufweist, die so konfiguriert ist, dass als Reaktion auf die Daten einer unautorisierten Vorrichtung, die in den Einstellungsanforderungsdaten enthalten sind, die als die vorbestimmten Beschränkungsdaten in einem Zustand eingestellt werden, bei dem die Einstellungsanforderungsdaten die Einstellung der vorbestimmten Verwaltungsvorrichtung nicht enthalten, die automatische Einstellungseinheit eine Quellenvorrichtung der Einstellungsanforderungsdaten zum Einstellen der vorbestimmten Verwaltungsvorrichtung einstellt.

2. Kommunikationsvorrichtung (10) gemäß Anspruch 1, wobei die Aufnahmebestimmungseinheit (25) zum Identifizieren einer Quellenvorrichtung von Daten konfiguriert ist, die durch die Netzwerkschnittstelle (27) aufgenommen werden, und zum Verwenden eines Identifikationsergebnisses, um zu bestimmen, ob Daten akzeptiert werden, die durch die Netzwerkschnittstelle (27) aufgenommen werden.

3. Kommunikationsvorrichtung (10) gemäß Anspruch 2, wobei:
eine Adresse einer Quellenvorrichtung von Daten in Daten enthalten ist, die von einer Vorrichtung zu der Kommunikationsvorrichtung (10) durch das Netzwerk übertragen werden;
die Aufnahmebestimmungseinheit (25) eine Quellenvorrichtung von Daten identifiziert, die durch die Netzwerkschnittstelle (27) aufgenommen werden, indem eine Adresse einer Quellenvorrichtung verwendet wird, die in den Daten enthalten ist, die durch die Netzwerkschnittstelle (27) aufgenommen werden.

4. Kommunikationsvorrichtung (10) gemäß Anspruch 3, des Weiteren mit einer Speichereinheit (17), die eine Adresse der vorbestimmten Verwaltungsvorrichtung speichert,
wobei die Aufnahmebestimmungseinheit (25) bestimmt, dass eine Quellenvorrichtung von Daten, die durch die Netzwerkschnittstelle (27) aufgenommen werden, der vorbestimmten Verwaltungsvorrichtung entspricht, falls eine Adresse, die in Daten enthalten ist, die durch die Netzwerkschnittstelle (27) aufgenommen werden, identisch mit der Adresse der vorbestimmten Verwaltungsvorrichtung ist, die in der Speichereinheit (17) gespeichert ist.

5. Kommunikationsvorrichtung (10) gemäß Anspruch 1, wobei:
die Prozessausführungseinheit (11) so konfiguriert ist, dass als Reaktion auf Daten einer unautorisierten Vorrichtung, die in den Einstellungsanforderungsdaten enthalten sind, die Prozessausführungseinheit (11) die Einstellungen der Kommunikationsvorrichtung (10) so ändert, dass die Daten der unautorisierten Vorrichtung, die in den Einstellungsanforderungsdaten enthalten sind, als die vorbestimmten Beschränkungsdaten eingestellt werden;
die Aufnahmebestimmungseinheit (25) bestimmt, die Daten nicht zu akzeptieren, die durch die Netzwerkschnittstelle (27) aufgenommen werden, und zwar als Reaktion auf eine Quellenvorrichtung der Daten, die durch die Netzwerkschnittstelle (27) entsprechend der zumindest einen unautorisierten Vorrichtung aufgenommen werden, die durch die vorbestimmten Beschränkungsdaten definiert ist, und bestimmt, die Daten zu akzeptieren, die durch die Netzwerkschnittstelle (27) aufgenommen werden, und zwar als Reaktion auf eine Quellenvorrichtung der Daten, die durch die Netzwerkschnittstelle (27) aufgenommen werden, die der zumindest einen unautorisierten Vorrichtung nicht entspricht, die durch die vorbestimmten Beschränkungsdaten definiert ist; und
die Aufnahmebestimmungseinheit (25) bestimmt, Daten zu akzeptieren, die durch die Netzwerkschnittstelle (27) aufgenommen werden, und zwar als Reaktion auf eine Quellenvorrichtung der Daten, die durch die Netzwerkschnittstelle (27) aufgenommen werden, die der vorbestimmten Verwaltungsvorrichtung entspricht, und zwar ungeachtet eines Bestimmungsergebnisses, das durch die Aufnahmebestimmungseinheit (25) gemäß den vorbestimmten Beschränkungsdaten gemacht wird.

6. Kommunikationsvorrichtung (10) gemäß Anspruch 1, wobei:
die Prozessausführungseinheit (11) so konfiguriert ist, dass als Reaktion auf Daten einer autorisierten Vorrichtung, die in den Einstellungsanforderungsdaten enthalten sind, die Prozessausführungseinheit (11) die Einstellungen der Kommunikationsvorrichtung (10) so ändert, dass die Daten der autorisierten Vorrichtung, die in den Einstellungsbeschränkungsdaten enthalten sind, als die vorbestimmten Beschränkungsdaten eingestellt werden;
die Aufnahmebestimmungseinheit (25) bestimmt, Daten zu akzeptieren, die durch die Netzwerkschnittstelle (27) aufgenommen werden, und zwar als Reaktion auf eine Quellenvorrichtung der Daten, die durch die Netzwerkschnittstelle (27) aufgenommen werden, die der zumindest einen autorisierten Vorrichtung entspricht, die durch die vorbestimmten Beschränkungsdaten definiert ist, und Daten nicht zu akzeptieren, die durch die Netzwerkschnittstelle (27) aufgenommen werden, und zwar als Reaktion auf eine Quellenvorrichtung der Daten, die durch die Netzwerkschnittstelle (27) aufgenommen werden, die der zumindest einen autorisierten Vorrichtung nicht entspricht, die durch die vorbestimmten Beschränkungsdaten definiert ist; und
die Aufnahmebestimmungseinheit (25) bestimmt, Daten zu akzeptieren, die durch die Netzwerkschnittstelle (27) aufgenommen werden, und zwar als Reaktion auf eine Quellenvorrichtung der Daten, die durch die Netzwerkschnittstelle (27) aufgenommen werden, die der vorbestimmten Verwaltungsvorrichtung entspricht, und zwar ungeachtet eines Bestimmungsergebnisses, das durch die Aufnahmebestimmungseinheit (25) gemäß den vorbestimmten Beschränkungsdaten gemacht wird.

7. Kommunikationsvorrichtung (10) gemäß Anspruch 6, des Weiteren mit einer automatischen Einstellungseinheit, die so konfiguriert ist, dass als Reaktion auf die Daten der autorisierten Vorrichtung, die in den Einstellungsanforderungsdaten enthalten sind, die als die vorbestimmten Beschränkungsdaten in einem Zustand eingestellt werden, bei dem die Einstellungsanforderungsdaten die Einstellung der vorbestimmten Verwaltungsvorrichtung nicht enthalten, die automatische Einstellungseinheit eine Quellenvorrichtung der Einstellungsanforderungsdaten für die Einstellung der vorbestimmten Verwaltungsvorrichtung einstellt.

8. Verwaltungssystem (1) mit einer Kommunikationsvorrichtung (10) gemäß einem der vorherigen Ansprüche und einer Datenverarbeitungsvorrichtung (30) mit einer Funktion zum Verwalten der Kommunikationsvorrichtung.

9. Verwaltungssystem (1) gemäß Anspruch 8,
wobei die Datenverarbeitungsvorrichtung (30) Folgendes aufweist:
eine erste Einstellungseinheit, die zum Einstellen der vorbestimmten Verwaltungsvorrichtung auf die Kommunikationsvorrichtung (10) gemäß der Einstellung bezüglich der vorbestimmten Verwaltungsvorrichtung konfiguriert ist, die durch eine Eingabevorrichtung (43) eingegeben wird;
eine zweite Einstellungseinheit, die zum Einstellen der vorbestimmten Beschränkungsdaten auf die Kommunikationsvorrichtung gemäß der Einstellung bezüglich den vorbestimmten Beschränkungsdaten konfiguriert ist, die durch die Eingabevorrichtung (43) eingegeben werden; und
eine Einstellungsbestimmungseinheit, die so konfiguriert ist, dass sie bestimmt, ob die Einstellung bezüglich der vorbestimmten Verwaltungsvorrichtung durch die Eingabevorrichtung (43) bestimmt wurde, bevor die zweite Einstellungseinheit einen Einstellungsbetrieb ausführt.

10. Verwaltungssystem (1) gemäß Anspruch 9, wobei die Datenverarbeitungsvorrichtung (30) des Weiteren eine Benachrichtigungseinheit aufweist, die so konfiguriert ist, dass, falls die Einstellungsbestimmungseinheit bestimmt, dass die Einstellung bezüglich der vorbestimmten Verwaltungsvorrichtung nicht bestimmt wurde, die Benachrichtigungseinheit einen Benutzer benachrichtigt, dass die vorbestimmte Verwaltungsvorrichtung nicht eingestellt wurde.

11. Verwaltungssystem (1) gemäß Anspruch 10, wobei die Benachrichtigungseinheit so konfiguriert ist, dass sie die Ausführung des Einstellungsbetriebs durch die zweite Einstellungseinheit zusätzlich zum Benachrichtigen des Benutzers stoppt, dass die vorbestimmte Verwaltungsvorrichtung nicht eingestellt wurde.

12. Verwaltungssystem (1) gemäß Anspruch 9, wobei die Prozessausführungseinheit (11) der Kommunikationsvorrichtung (10) so konfiguriert ist, dass, falls Einstellungsanforderungsdaten, die eine Ausführung zum Ändern der Einstellungen fordern, durch die Netzwerkschnittstelle (27) von dem Netzwerk aufgenommen werden, die Prozessausführungseinheit (11) Einstellungen der Kommunikationsvorrichtung (10) gemäß den Einstellungsanforderungsdaten ändert;
wobei die Datenverarbeitungsvorrichtung (30) eine Netzwerkschnittstelle (47) aufweist, die eine Schnittstelle der Datenverarbeitungsvorrichtung (30) mit dem Netzwerk bildet,
wobei die erste Einstellungseinheit die vorbestimmte Verwaltungsvorrichtung auf die Kommunikationsvorrichtung (10) einstellt, indem Einstellungsanforderungsdaten, die die Einstellung bezüglich der vorbestimmten Verwaltungsvorrichtung enthalten, die durch die Eingabevorrichtung (43) eingegeben werden, zu der Kommunikationsvorrichtung (10) durch das Netzwerk übertragen werden,
wobei die zweite Einstellungseinheit die vorbestimmten Beschränkungsdaten für die Kommunikationsvorrichtung (10) einstellt, indem Einstellungsanforderungsdaten, die die Einstellung bezüglich der zumindest einen unautorisierten Vorrichtung enthalten, zu der Kommunikationsvorrichtung (10) durch das Netzwerk übertragen werden.

13. Verwaltungssystem (1) gemäß Anspruch 9, wobei die Datenverarbeitungsvorrichtung (30) des Weiteren eine automatische Einstellungseinheit aufweist, die so konfiguriert ist, dass, falls die Einstellungsbestimmungseinheit bestimmt, dass die Einstellung bezüglich der vorbestimmten Verwaltungsvorrichtung nicht bestimmt wurde, die automatische Einstellungseinheit die Einstellung der vorbestimmten Verwaltungsvorrichtung auf die Kommunikationsvorrichtung (10) einstellt, indem Einstellungsanforderungsdaten, die die Einstellung der vorbestimmten Verwaltungsvorrichtung enthalten, zu der Kommunikationsvorrichtung (10) übertragen werden.

14. Verwaltungssystem (1) gemäß einem der Ansprüche 8 bis 13,
wobei die Datenverarbeitungsvorrichtung (30) des Weiteren Folgendes aufweist:
eine Einstellungsbestimmungseinheit, die so konfiguriert ist, dass sie bestimmt, ob die Einstellung bezüglich der vorbestimmten Verwaltungsvorrichtung bestimmt ist, bevor die zweite Einstellungseinheit einen Einstellungsbetrieb ausführt; und
eine automatische Einstellungseinheit, die so konfiguriert ist, dass, falls die Einstellungsbestimmungseinheit bestimmt, dass die Einstellung bezüglich der vorbestimmten Verwaltungsvorrichtung nicht bestimmt wurde, die automatische Einstellungseinheit eine Quellenvorrichtung von Daten der Einstellung bezüglich der vorbestimmten Beschränkungsdaten für die vorbestimmte Verwaltungsvorrichtung einstellt.

15. Verfahren für eine Netzwerkkommunikation, die durch einen Computer mit einer Netzwerkschnittstelle (27) durchgeführt wird, die eine Schnittstelle des Computers mit einem Netzwerk bildet, wobei das Verfahren die folgenden Schritte aufweist:
Bestimmen, ob Daten akzeptiert werden, die durch die Netzwerkschnittstelle (27) von dem Netzwerk aufgenommen werden, und zwar gemäß vorbestimmten Beschränkungsdaten, die zumindest eine autorisierte Vorrichtung und/oder zumindest eine unautorisierte Vorrichtung definieren; und
Ausführen eines Prozesses als Reaktion auf Daten, von denen bestimmt wird, dass sie akzeptiert werden, so dass, falls Einstellungsanforderungsdaten zum Fordern einer Ausführung von Änderungen von Einstellungen durch die Netzwerkschnittstelle (27) von dem Netzwerk aufgenommen werden, der Prozess die Einstellungen der Kommunikationsvorrichtung gemäß den Einstellungsanforderungsdaten ändert; und
wobei bei dem Bestimmungsschritt bestimmt wird, Daten zu akzeptieren, die durch die Netzwerkschnittstelle (27) von dem Netzwerk aufgenommen werden, falls eine Quellenvorrichtung von Daten, die durch die Netzwerkschnittstelle (27) aufgenommen werden, einer vorbestimmten Verwaltungsvorrichtung entspricht, die zum Verwalten des Computers dient, und zwar ungeachtet eines Bestimmungsergebnisses, das bei dem Bestimmungsschritt gemäß den vorbestimmten Beschränkungsdaten gemacht wird,
**dadurch gekennzeichnet, dass**:
als Reaktion auf die Daten einer unautorisierten Vorrichtung, die in den Einstellungsanforderungsdaten enthalten sind, die als die vorbestimmten Beschränkungsdaten in einem Zustand eingestellt werden, bei dem die Einstellungsanforderungsdaten die Einstellung der vorbestimmten Verwaltungsvorrichtung nicht enthalten, eine Quellenvorrichtung der Einstellungsanforderungsdaten zum Einstellen der vorbestimmten Verwaltungsvorrichtung eingestellt wird.

16. Verfahren gemäß Anspruch 15, des Weiteren mit einem Identifizieren einer Quellenvorrichtung von Daten, die durch die Netzwerkschnittstelle (27) aufgenommen werden, so dass ein Identifikationsergebnis bei dem Bestimmungsschritt verwendet wird.

17. Computerprogrammprodukt, dass computerlesbare Befehle aufweist, die den Computer, wenn er in Betrieb ist, zum Durchführen der Schritte des Verfahrens gemäß Anspruch 15 oder 16 veranlassen.

## Revendications

1. Dispositif de communication (10), comprenant :
une interface de réseau (27) qui met le dispositif de communication (10) en interface avec un réseau ;
une unité de jugement de réception (25) configurée pour juger s'il faut accepter des données reçues par l'interface de réseau (27) en provenance du réseau conformément à des données de restriction prédéterminées définissant au moins un dispositif autorisé et/ou au moins un dispositif non autorisé ; et
une unité d'exécution de processus (11) configurée pour exécuter un processus en réponse à l'unité de jugement de réception (25) jugeant s'il faut accepter lesdites données de sorte que si des données de demande de réglage pour demander l'exécution d'un changement de réglages sont reçues par le biais de l'interface de réseau (27) en provenance du réseau, l'unité d'exécution de processus (11) change les réglages du dispositif de communication conformément aux données de demande de réglage ; et
dans lequel l'unité de jugement de réception (25) est en outre configurée pour accepter des données reçues par l'interface de réseau (27) en provenance du réseau si un dispositif source de données correspond à un dispositif de gestion prédéterminé servant à gérer le dispositif de communication (10) dans le réseau indépendamment d'un résultat de jugement effectué par l'unité de gestion de réception (25) conformément aux données de restriction prédéterminées ;
**caractérisé en ce que** :
le dispositif de communication (10) comprend en outre une unité de réglage automatique configurée de sorte que, en réponse aux données sur un dispositif non autorisé contenues dans les données de demande de réglage qui sont réglées en tant que données de restriction prédéterminées dans un état dans lequel les données de demande de réglage ne contiennent pas de réglage du dispositif de gestion prédéterminé, l'unité de réglage automatique règle un dispositif source des données de demande de réglage pour le réglage du dispositif de gestion prédéterminé.

2. Dispositif de communication (10) selon la revendication 1, dans lequel l'unité de jugement de réception (25) est configurée pour identifier un dispositif source de données reçues par l'interface de réseau (27) et pour utiliser un résultat d'identification pour juger s'il faut accepter des données reçues par l'interface de réseau (27).

3. Dispositif de communication (10) selon la revendication 2, dans lequel :
une adresse d'un dispositif source de données est contenue dans des données transmises d'un dispositif au dispositif de communication (10) par le biais du réseau ;
l'unité de jugement de réception (25) identifie un dispositif source de données reçues par l'interface de réseau (27) en utilisant une adresse d'un dispositif source contenue dans des données reçues par l'interface de réseau (27).

4. Dispositif de communication (10) selon la revendication 3, comprenant en outre une unité de mémorisation (17) mémorisant une adresse du dispositif de gestion prédéterminé,
dans lequel l'unité de jugement de réception (25) juge qu'un dispositif source de données reçues par l'interface de réseau (27) correspond au dispositif de gestion prédéterminé si une adresse contenue dans des données reçues par l'interface de réseau (27) est identique à l'adresse du dispositif de gestion prédéterminé mémorisée dans l'unité de mémorisation (17).

5. Dispositif de communication (10) selon la revendication 1, dans lequel :
l'unité d'exécution de processus (11) est configurée de sorte que, en réponse à des données sur un dispositif non autorisé qui sont contenues dans les données de demande de réglage, l'unité d'exécution de processus (11) change les réglages du dispositif de communication (10) de telle manière que les données sur le dispositif non autorisé contenues dans les données de demande de réglage soient réglées en tant que données de restriction prédéterminées ;
le dispositif de jugement de réception (25) juge de ne pas accepter les données reçues par l'interface de réseau (27) en réponse à un dispositif source des données reçues par l'interface de réseau (27) correspondant à l'au moins un dispositif non autorisé défini par les données de restriction prédéterminées, et juge d'accepter les données reçues par l'interface de réseau (27) en réponse à un dispositif source des données reçues par l'interface de réseau (27) ne correspondant pas à l'au moins un dispositif non autorisé défini par les données de restriction prédéterminées ; et
l'unité de jugement de réception (25) juge d'accepter les données reçues par l'interface de réseau (27) en réponse à un dispositif source des données reçues par l'interface de réseau (27) correspondant au dispositif de gestion prédéterminé indépendamment d'un résultat de jugement effectué par l'unité de jugement de réception (25) conformément aux données de restriction prédéterminées.

6. Dispositif de communication (10) selon la revendication 1, dans lequel :
l'unité d'exécution de processus (11) est configurée de sorte que, en réponse aux données sur un dispositif autorisé qui sont contenues dans les données de demande de réglage, l'unité d'exécution de processus (11) change les réglages du dispositif de communication (10) de sorte que les données sur le dispositif autorisé contenues dans les données de demande de réglage soient réglées en tant que données de restriction prédéterminées ;
le dispositif de jugement de réception (25) juge d'accepter les données reçues par l'interface de réseau (27) en réponse à un dispositif source des données reçues par l'interface de réseau (27) correspondant à l'au moins un dispositif autorisé défini par les données de restriction prédéterminées, et de ne pas accepter les données reçues par l'interface de réseau (27) en réponse à un dispositif source des données reçues par l'interface de réseau (27) ne correspondant pas à l'au moins un dispositif autorisé défini par les données de restriction prédéterminées ; et
l'unité de jugement de réception (25) juge d'accepter les données reçues par l'interface de réseau (27) en réponse à un dispositif source des données reçues par l'interface de réseau (27) correspondant au dispositif de gestion prédéterminé indépendamment d'un résultat de jugement effectué par l'unité de jugement de réception (25) conformément aux données de restriction prédéterminées.

7. Dispositif de communication (10) selon la revendication 6, comprenant en outre une unité de réglage automatique configurée de sorte que, en réponse aux données sur le dispositif autorisé contenues dans les données de demande de réglage étant réglées en tant que données de restriction prédéterminées dans un état dans lequel les données de demande de réglage ne contiennent pas de réglage du dispositif de gestion prédéterminé, l'unité de réglage automatique règle un dispositif source des données de demande de réglage pour le réglage du dispositif de gestion prédéterminé.

8. Système de gestion (1) comprenant un dispositif de communication (10) selon l'une quelconque des revendications précédentes et un dispositif de traitement de données (30) ayant une fonction de gestion du dispositif de communication.

9. Système de gestion (1) selon la revendication 8, dans lequel le dispositif de traitement de données (30) comprend :
une première unité de réglage configurée pour régler le dispositif de gestion prédéterminé sur le dispositif de communication (10) conformément au réglage relatif au dispositif de gestion prédéterminé entré par le biais d'un dispositif d'entrée (43) ;
une deuxième unité de réglage configurée pour régler les données de restriction prédéterminées sur le dispositif de communication conformément au réglage relatif aux données de restriction prédéterminées entrées par le biais du dispositif d'entrée (43) ; et
une unité de jugement de réglage configurée pour juger si le réglage relatif au dispositif de gestion prédéterminé a été désigné par le biais du dispositif d'entrée (43) avant que la deuxième unité de réglage n'exécute une opération de réglage.

10. Système de gestion (1) selon la revendication 9, dans lequel le dispositif de traitement de données (30) comprend en outre une unité de notification configurée de sorte que, si l'unité de jugement de réglage juge que le réglage relatif au dispositif de gestion prédéterminé n'a pas été désigné, l'unité de notification notifie à un utilisateur que le dispositif de gestion prédéterminé n'a pas été réglé.

11. Système de gestion (1) selon la revendication 10, dans lequel l'unité de notification est configurée pour arrêter l'opération de réglage à exécuter par la deuxième unité de réglage en plus de notifier à l'utilisateur que le dispositif de gestion prédéterminé n'a pas été réglé.

12. Système de gestion (1) selon la revendication 9,
dans lequel l'unité d'exécution de processus (11) du dispositif de communication (10) est configurée de sorte que, si des données de demande de réglage demandant l'exécution d'un changement de réglages sont reçues par le biais de l'interface de réseau (27) en provenance du réseau, l'unité d'exécution de processus (11) change des réglages du dispositif de communication (10) conformément aux données de demande de réglage ;
dans lequel le dispositif de traitement de données (30) comprend une interface de réseau (47) qui met le dispositif de traitement de données (30) en interface avec le réseau,
dans lequel la première unité de réglage règle le dispositif de gestion prédéterminé sur le dispositif de communication (10) en transmettant des données de demande de réglage contenant le réglage relatif au dispositif de gestion prédéterminé entré par le biais du dispositif d'entrée (43) sur le dispositif de communication (10) par le biais du réseau,
dans lequel la deuxième unité de réglage règle les données de restriction prédéterminées sur le dispositif de communication (10) en transmettant des données de demande de réglage contenant le réglage relatif à l'au moins un dispositif non autorisé au dispositif de communication (10) par le biais du réseau.

13. Système de gestion (1) selon la revendication 9, dans lequel le dispositif de traitement de données (30) comprend en outre une unité de réglage automatique configurée de sorte que, si l'unité de jugement de réglage juge que le réglage relatif au dispositif de gestion prédéterminé n'a pas été désigné, l'unité de réglage automatique règle le réglage du dispositif de gestion prédéterminé sur le dispositif de communication (10) en transmettant des données de demande de réglage contenant le réglage du dispositif de gestion prédéterminé au dispositif de communication (10).

14. Système de gestion (1) selon l'une quelconque des revendications 8 à 13,
dans lequel le dispositif de traitement de données (30) comprend :
une unité de jugement de réglage configurée pour juger si le réglage relatif au dispositif de gestion prédéterminé a été désigné avant que la deuxième unité de réglage n'exécute une opération de réglage ; et
une unité de réglage automatique configurée de sorte que, si l'unité de jugement de réglage juge que le réglage relatif au dispositif de gestion prédéterminé n'a pas été désigné, l'unité de réglage automatique règle un dispositif source de données du réglage relatif aux données de restriction prédéterminées pour le dispositif de gestion prédéterminé.

15. Procédé pour des communications de réseau à effectuer par un ordinateur ayant une interface de réseau (27) mettant l'ordinateur en interface avec un réseau, le procédé comprenant les étapes consistant à :
juger s'il faut accepter des données reçues par l'interface de réseau (27) en provenance du réseau conformément à des données de restriction prédéterminées définissant au moins un dispositif autorisé et/ou au moins un dispositif non autorisé ; et
exécuter un processus en réponse à des données jugées pour être acceptées de sorte que si des données de demande de réglage pour demander l'exécution d'un changement de réglages sont reçues par le biais de l'interface de réseau (27) en provenance du réseau, le processus change les réglages du dispositif de communication conformément aux données de demande de réglage ; et
dans lequel, à l'étape de jugement, il est jugé d'accepter des données reçues par l'interface de réseau (27) en provenance du réseau si un dispositif source de données reçues par l'interface de réseau (27) correspond à un dispositif de gestion prédéterminé servant à gérer l'ordinateur indépendamment d'un résultat de jugement effectué par l'étape de jugement conformément aux données de restriction prédéterminées ;
**caractérisé en ce que** :
en réponse aux données sur un dispositif non autorisé contenues dans les données de demande de réglage qui sont réglées en tant que données de restriction prédéterminées dans un état dans lequel les données de demande de réglage ne contiennent pas de réglage du dispositif de gestion prédéterminé, régler un dispositif source des données de demande de réglage pour le réglage du dispositif de gestion prédéterminé.

16. Procédé selon la revendication 15, comprenant en outre l'étape consistant à identifier un dispositif source de données reçues par l'interface de réseau (27) de sorte qu'un résultat d'identification soit utilisé à l'étape de jugement.

17. Produit de programme informatique comprenant des instructions lisibles par ordinateur amenant l'ordinateur, lorsqu'elles sont exécutées, à effectuer les étapes du procédé selon la revendication 15 ou 16.
